(19) Europäisches Patentamt
European Patent Office
Office européen des brevets

(11) EP 3 788 118 B1

(12) # FASCICULE DE BREVET EUROPEEN

(45) Date de publication et mention de la délivrance du brevet:
**04.10.2023 Bulletin 2023/40**

(21) Numéro de dépôt: **19720614.7**

(22) Date de dépôt: **30.04.2019**

(51) Classification Internationale des Brevets (IPC):
***C09K 11/02** (2006.01)* ***C07F 5/00** (2006.01)*
***C08J 3/14** (2006.01)*

(52) Classification Coopérative des Brevets (CPC):
**C09K 11/025; C07F 5/003**

(86) Numéro de dépôt international:
**PCT/EP2019/061085**

(87) Numéro de publication internationale:
**WO 2019/211292 (07.11.2019 Gazette 2019/45)**

(54) **POUDRE FORMÉE DE PARTICULES DE TYPE COEUR-ENVELOPPE COMPRENANT DES POLYMÈRES DE COORDINATION A BASE DE TERRES RARES, PROCÉDÉ D'OBTENTION, MATÉRIAU ET UTILISATION EN DÉRIVANT**

PULVER AUS TEILCHEN VOM »KERN-HÜLLE-TYP MIT KOORDINATIONSPOLYMEREN MIT SELTENEN ERDEN, VERFAHREN ZUR HERSTELLUNG DAVON, MATERIAL UND DARAUS ABGELEITETE VERWENDUNG

POWDER FORMED FROM "CORE-ENVELOPE"-TYPE PARTICLES, COMPRISING COORDINATION POLYMERS CONTAINING RARE EARTHS, METHOD FOR THE PRODUCTION THEREOF, MATERIAL AND USE DERIVED THERE-FROM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.05.2018 FR 1853832**

(43) Date de publication de la demande:
**10.03.2021 Bulletin 2021/10**

(73) Titulaire: **Institut National des Sciences Appliquées de Rennes**
**35700 Rennes (FR)**

(72) Inventeurs:
- **ABDALLAH, Ahmad**
  **35510 CESSON-SEVIGNE (FR)**
- **DAIGUEBONNE, Carole**
  **35235 THORIGNE-FOUILLARD (FR)**
- **SUFFREN, Yan**
  **35000 RENNES (FR)**
- **GUILLOU, Olivier**
  **35235 THORIGNE-FOUILLARD (FR)**

(74) Mandataire: **Vidon Brevets & Stratégie**
**16B, rue de Jouanet**
**BP 90333**
**35703 Rennes Cedex 7 (FR)**

(56) Documents cités:
**FR-A1- 3 004 459**

- **X. FAN ET AL: "Heteronuclear lanthanide-based coordination polymers exhibiting tunable multiple emission spectra", JOURNAL OF MATERIALS CHEMISTRY C, vol. 2, no. 28, 1 janvier 2014 (2014-01-01), page 5510, XP055553544, UK ISSN: 2050-7526, DOI: 10.1039/c4tc00506f**
- **INSA BADIANE ET AL: "High Brightness and Easy Color Modulation in Lanthanide-Based Coordination Polymers with 5-Methoxyisophthalate as Ligand: Toward Emission Colors Additive Strategy", CRYSTAL GROWTH & DESIGN., vol. 17, no. 3, 17 février 2017 (2017-02-17), pages 1224-1234, XP055553540, US ISSN: 1528-7483, DOI: 10.1021/acs.cgd.6b01607**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 788 118 B1

- ALBERT-MANGA BADIANE ET AL: "Lanthanide-Based Coordination Polymers with a 4,5-Dichlorophthalate Ligand Exhibiting Highly Tunable Luminescence: Toward Luminescent Bar Codes", INORGANIC CHEMISTRY, vol. 57, no. 6, 26 février 2018 (2018-02-26), pages 3399-3410, XP055553546, EASTON, US ISSN: 0020-1669, DOI: 10.1021/acs.inorgchem.8b00169
- XIAO FAN ET AL: "A Family of Lanthanide-Based Coordination Polymers with Boronic Acid as Ligand", INORGANIC CHEMISTRY, vol. 54, no. 11, 14 mai 2015 (2015-05-14), pages 5534-5546, XP055553518, EASTON, US ISSN: 0020-1669, DOI: 10.1021/acs.inorgchem.5b00635

## Description

### 1. Domaine de l'invention

L'invention concerne le domaine technique des polymères de coordination à base de terres rares. Plus précisément, l'invention concerne une poudre formée de particules comprenant des polymères de coordination à base de terres rares contenant au moins deux terres rares luminescentes.

L'invention concerne également un procédé de fabrication d'une poudre formée de particules de type « coeur-enveloppe » comprenant un coeur et au moins une enveloppe recouvrant le coeur, le coeur et au moins une enveloppe comprenant chacun un polymère de coordination de terre(s) rare(s).

L'invention concerne aussi un matériau intégrant la poudre et l'utilisation de la poudre pour le traçage d'objets.

### 2. Art antérieur

Un polymère de coordination est une structure polymérique inorganique ou organométallique comprenant des centres cationiques métalliques reliés entre eux par des ligands organiques. De manière plus formelle, un polymère de coordination peut être défini comme un composé de coordination qui présente la répétition d'unités de coordination de type cation métallique-ligand dans une, deux ou trois dimensions.

Le centre cationique métallique peut notamment être choisi parmi les ions lanthanoïdes trivalents, de configuration électronique $Ln^{3+}$ : $[Xe]4f^n5s^25p^6$ avec n un entier allant de 0 à 14, présentant des orbitales de valence 4f qui sont écrantées par les orbitales pleines 5s et 5p. La contribution covalente à la liaison chimique est donc très faible (quelques %) et en première approximation la liaison Métal-Ligand présente un caractère essentiellement ionique. Les lanthanoïdes, qui constituent la plus longue série d'éléments du tableau périodique chimiquement semblables, conduisent ainsi fréquemment à des familles de composés isostructuraux. Cette famille d'éléments est souvent complétée par l'yttrium et le scandium, ce qui forme le groupe des terres rares.

Depuis une dizaine d'années, les polymères de coordination luminescents à base d'ions lanthanides suscitent un intérêt croissant du fait de leurs potentielles applications dans des domaines variés tels que l'éclairage ou l'affichage, les bio-marqueurs, les thermomètres moléculaires ou encore les marqueurs utilisables dans la lutte contre la contrefaçon. Dans les polymères de coordination hétéro-poly-lanthanides, décrits pour la première fois en 1994 par Zhou *et al.,* les ions lanthanides sont répartis aléatoirement sur les sites métalliques et sont parfois appelés "alliages moléculaires". Cette répartition aléatoire, qui constitue un atout majeur dans le domaine de la luminescence, est intrinsèquement liée aux propriétés chimiques uniques des ions lanthanides. Ce type d'alliages moléculaires a démontré son intérêt dans le domaine du marquage d'objets et de la lutte anti-contrefaçon. En effet, si on considère que la composition de ces alliages moléculaires peut varier de 1 % en 1 %, il est ainsi possible, à partir de treize terres rares conduisant à des polymères de coordination homo-lanthanides isostructuraux, de synthétiser $4.10^{15}$ ( $C_{112}^{100}$ ) alliages moléculaires isostructuraux et présentant des compositions chimiques différentes.

L'un des problèmes rencontrés lors de l'utilisation de ces marqueurs est que les transferts d'énergie intermétalliques sont dans certains cas à l'origine d'un *quenching* de la luminescence ce qui rend impossible la lecture optique et non destructrice du marquage. Ces transferts intermétalliques peuvent conduire en effet à une extinction partielle ou totale de la luminescence des terres rares optiquement actives. A cause de ce phénomène de transferts d'énergie intermétalliques, le nombre de combinaisons réel d'alliages moléculaires utilisables dans le marquage de matériaux détectable par lecture otique, se trouve considérablement réduit.

On connaît du document FR 3004459 une particule inorganique coeur/coquille présentant des propriétés de luminescence émanant de la présence d'au moins un élément choisi parmi les terres rares. Le coeur et la coquille comprennent un polymère de coordination cristallin.

La publication scientifique de X. FAN et al « Heteronuclear lanthanide-based coordination polymers exhibiting tunable multiple emission spectra » (JOURNAL OF MATERIALS CHEMISTRY C, vol 2 no 28) concerne l'étude d'une nouvelle famille de composés hétéro-nucléaires à base de lanthanides. Cette étude révèle que la compétition entre le transfert d'énergie intermétallique et le transfert d'électrons photo-induit donne lieu à des spectres d'émission multiples complexes.

La publication scientifique de I. BADIANE et al « High Brightness and Easy Color Modulation in Lanthanide-Based Coordination Polymers with 5-Methoxyisophtalate as Ligand : Toward Emission Colors Additive Strategy », (CRYSTAL GROWTH & DESIGN. , vol. 17, no 3) concerne l'étude des propriétés luminescentes d'une famille de composés issus de la réaction entre des chlorures de lanthanides et le sel disodique de l'acide 5-méthoxyisophtalique, Na2(mip)-7H2O.

La publication scientifique d'ABERT-MANGA BADIANE ET AL : « Lanthanide-Based Coordination Polymers with a 4,5-Dichorophtalate Ligand Exhibiting Highly Tunable Luminescence : Toward Luminescent Bar Codes » (INORGANIC CHEMISTRY, vol.57, no 6) concerne l'étude des propriétés luminescentes d'une famille de composés issus des réactions dans l'eau du 4,5-dichlorophtalate (dcpa) avec les ions lanthanides les plus lourds.

La publication scientifique de XIAO FAN et AL : « A Family of Lanthanide-Based Coordination Polymers with Boronic Acid as Ligand » (INORGANIC CHEMISTRY, vol. 54, no11) concerne l'étude d'une famille de polymères de coordination à base de lanthanides dont la formule chimique générale est {[Ln(cpbOH)(H2O)2](cpb)}∞ issus des réactions dans l'eau entre le sel de sodium de l'acide 4-carboxyphénylboronique (Hcpb) et des ions lanthanides (Pr-Nd, Sm-Lu et Y). Selon cette étude, cette famille de composés constitue le premier exemple de polymères de coordination à base de lanthanides impliquant l'acide 4-carboxyphénylboronique comme ligand.

## 3. Objectifs

Un objectif de la présente invention est de proposer une poudre à base de polymères de coordination de terres rares dont les particules comprennent au moins deux terres rares luminescentes et dans laquelle les transferts d'énergie intermétalliques sont limités, voire inexistants.

Un autre objectif est, au moins selon certains modes de réalisation, de proposer une poudre microcristalline.

Un autre objectif est, au moins selon certains modes de réalisation, de proposer une poudre ayant une structure homogène.

Un autre objectif est de proposer un procédé de fabrication d'une poudre formée de particules de type « coeur-enveloppe » comprenant un coeur et au moins une enveloppe recouvrant le coeur, constitués tous deux de polymères de coordination de terre(s) rare(s).

D'autres objectifs sont notamment de proposer un matériau et une utilisation d'une poudre selon l'invention.

## 4. Exposé de l'invention

Ces objectifs sont atteints grâce à une poudre formée de particules de type « coeur-enveloppe » comprenant un coeur et N enveloppe(s), où N est un entier supérieur ou égal à 1, ladite/lesdites enveloppe(s) recouvrant le coeur. Le coeur et l'/les enveloppe(s) comprennent chacun un polymère de coordination cristallin de formule respective $(TR^{(i)}X)_\infty$, où pour tout i allant de 0 à N, $TR^{(i)}$ représente un cation trivalent de terre rare ou un mélange de cations trivalents de terres rares, les $TR^{(i)}$ consécutifs ayant une composition différente et au moins deux des $TR^{(i)}$ comprenant respectivement au moins un cation de terre rare luminescent, et où X représente un ligand adapté pour la formation de polymères de coordination. La poudre est susceptible d'être obtenue par un procédé comprenant les étapes successives suivantes :

- la fourniture d'un sel de ligand X et de sels de $TR^{(i)}$, le sel de ligand X étant fourni de telle sorte à être au moins en proportions stoechiométriques par rapport à l'ensemble cumulé des $TR^{(i)}$ pour la formation des polymères de coordination $(TR^{(i)}X)_\infty$;
- le mélange du sel de $TR^{(0)}$ avec le sel de ligand X, pour former par précipitation un précipité de polymère de coordination de formule $(TR^{(0)}X)_\infty$ ; et,
- pour tout j allant de 0 à N-1, l'ajout du sel de $TR^{(j+1)}$ afin de former par précipitation et croissance épitaxiale la $(j+1)^{ème}$ enveloppe $(TR^{(j+1)}X)_\infty$ recouvrant $(TR^{(j)}X)_\infty$;

Les particules de la poudre cristalline selon l'invention sont donc multicouches, les couches étant formées par un coeur et au moins une enveloppe entourant le coeur. Cette structure résout le problème des transferts d'énergie intermétalliques. En effet, il est admis que les transferts d'énergie intermétalliques deviennent moins efficaces lorsque les ions métalliques sont distants de plus de 10 Å. Ainsi, dans la structure multicouches selon l'invention, le transfert intermétallique est considérablement limité entre les polymères de coordination disposés sur deux couches distinctes. Les luminescences de chacun des cations de terres rares luminescents disposés sur des couches distinctes peuvent donc être observées simultanément sous une même irradiation tout en limitant le problème de transfert d'énergie.

Les $TR^{(i)}$ représentent chacun un cation trivalent de terre rare ou un mélange de cations trivalents de terres rares. On entend par « terre rare » l'ensemble des lanthanoïdes, c'est à dire : La, Ce, Pr, Nd, Pm, Sm, Eu, Gd, Tb Dy, Ho, Er, Tm, Yb et Lu, complété par les éléments Sc et Y. Les terres rares sont tous sous la forme de cation trivalent, c'est à dire qu'ils ont une charge électrique 3+. Ceci autorise l'isostructuralité des différents polymères de coordination cristallins de formule respective $(TR^{(i)}X)_\infty$ et une croissance épitaxiale rendue possible par la proximité de leurs paramètres de maille.

Au sens de la présente invention, on entend par cation trivalent de terre rare « luminescent » le fait que le cation soumis à un rayonnement UV émette de la lumière selon des transitions de type f-f. Ces transitions ont la propriété de former des bandes très fines, pratiquement monochromatiques, ce qui est particulièrement avantageux pour une utilisation dans le domaine des signatures optiques. Les cations trivalents de terres rares luminescents sont: Pr(III), Nd(III), Pm(III), Sm(III), Eu(III), Tb(III), Dy(III), Ho(III), Er(III) et Tm(III), Yb (III). En particulier, Tb(III) possède une luminescence dans le domaine visible uniquement. Nd(III) et Yb(III) possèdent une luminescence dans le domaine de l'infrarouge uniquement. Pr(III), Pm(III), Sm(III), Eu(III), Dy(III), Ho(III), Er(III) et Tm(III) possèdent une luminescence à la fois dans le domaine visible et infrarouge. Les cations trivalents de terres rares non luminescents, c'est à dire n'émettant pas de lumière selon des transitions f-f, sont : Sc(III), Y(III), La(III), Ce(III) (émission d-f), Gd(III) (émission UV) et Lu(III).

Le ligand X est choisi de telle sorte à pouvoir former une famille de polymères de coordination cristallins isostructuraux avec les $TR^{(i)}$. Compte tenu des propriétés chimiques semblables des terres rares, tous les ligands conduisant à des polymères de coordination avec une terre rare sont appropriés pour former des polymères de coordinations avec les autres terres rares. Le ligand X doit notamment avoir un rôle structurant pour conduire à des polymères de coordination cristallisés. De plus, le ligand X doit être raisonnablement soluble dans le solvant utilisé pour la précipitation et avoir une bonne affinité chimique avec les $TR^{(i)}$. Avantageusement, le ligand X doit avoir un effet d'antenne vis-à-vis des cations trivalents $TR^{(i)}$.

Selon le ligand X utilisé, le polymère de coordination peut avoir différentes formes cristallines.

De plus, selon le ligand X utilisé, le polymère de coordination peut être un polymère de coordination 1D, 2D ou 3D.

Pour un ligand X donné, les polymères de coordination $(TR^{(i)}X)_\infty$ ont une même structure cristalline et des paramètres de maille proches, ce qui autorise une croissance par épitaxie entre les différentes couches.

Le ligand X peut notamment être choisi dans la famille des benzène-carboxylates, substitués ou non. Préférentiellement, le ligand X a pour formule :

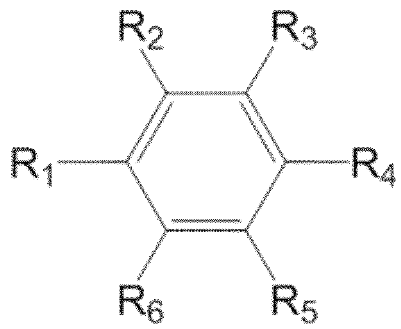

où $-R_1$ est choisi parmi les groupements -COzH, $-PO(OH)_2$, $-SO_3H$, $-B(OH)_2$ et où $-R_2$, $-R_3$, $- R_4$, $-R_5$ et $-R_6$ sont choisis indépendemment parmi la liste des groupements suivants: alkyle, $-CO_2H$, $-PO(OH)_2$, $-SO_3H$, $-B(OH)_2$, -H, $-NH_2$, $-OCH_3$, $-NO_2$, -OH, -Cl, -F, -Br, -I, -CN, $-O^-$ et $-N(CH_3)_2$.

Le ligand X peut en particulier être un ligand 4-carboxy-phényl-boronate. Ce ligand a pour avantage d'être non toxique. Ce ligand a été utilisé en partie expérimentale pour démontrer l'efficacité de la structure de type « coeur-enveloppe » des particules pour limiter, voire supprimer, le transfert d'énergie intermétallique. En effet, le transfert énergétique dans un polymère de coordination ayant le 4-carboxy-phényl-boronate comme ligand est très efficace.

Dans certains modes de réalisation, le polymère de coordination du coeur $(TR^{(0)}X)_\infty$ comprend au moins un cation terre rare luminescent.

Dans certains modes de réalisation, les polymères de coordination $(TR^{(i)}X)_\infty$ sont des polymères homo-terre rare. Ceci est notamment intéressant quand il existe des transferts intermétalliques entre $TR^{(i)}$.

Dans certains modes de réalisation, au moins un des polymères de coordination $(TR^{(i)}X)_\infty$ comprend au moins un cation terre rare luminescent dans le spectre visible. Ceci permet notamment de marquer la poudre et de repérer facilement sa présence à l'œil nu.

Le nombre d'enveloppes N est un entier supérieur ou égal à un. N peut être compris entre 1 et 5. En effet, au-dessus de 5 enveloppes, la luminescence des couches les plus internes n'est plus suffisamment mesurable.

Dans certains modes de réalisation, N est supérieur ou égal à 2. Dans ces modes de réalisation, au moins un des polymères de coordination $(TR^{(i)}X)_\infty$ peut ne contenir qu'un cation trivalent de terre rare non luminescent et séparer deux polymères de coordination $(TR^{(i-1)}X)_\infty$ et $(TR^{(i+1)}X)_\infty$ qui lui sont adjacents comprenant chacun au moins un cation terre rare luminescent. Le au moins un des polymères de coordination $(TR^{(i)}X)_\infty$ non luminescent joue alors le rôle d'espaceur entre les cations terres rares luminescents des polymères $(TR^{(i-1)}X)_\infty$ et $(TR^{(i+1)}X)_\infty$, ce qui empêche encore davantage, voire supprime, tout phénomène de transfert intermétallique entre les cations terres rares luminescents de ces polymères. Dans un mode de réalisation particulier où N=2, les polymères de coordination constituant le coeur et la deuxième enveloppe peuvent avantageusement comporter uniquement des cations de terre rare luminescents.

Les enveloppes peuvent avoir une épaisseur moyenne inférieure ou égale à 500 nm, de préférence inférieure ou égale à 100 nm. Ceci permet que la luminescence de chaque couche, même les plus internes, soit mesurable.

La poudre selon l'invention peut avoir une granulométrie inférieure ou égale à 5 $\mu$m, de préférence inférieure ou égale à 1 $\mu$m.

La présente invention concerne également un procédé pour la fabrication d'une poudre formée de particules de type « coeur-enveloppe » comprenant un coeur et N enveloppes, où N est un entier supérieur ou égal à 1, lesdites enveloppes recouvrant le coeur. Le coeur et lesdites enveloppes comprennent chacun un polymère de coordination de formule respective $(TR^{(i)}X)_\infty$, où pour tout i allant de 0 à N, $TR^{(i)}$ représente un cation trivalent de terre rare ou un mélange de cations trivalents de terres rares, les $TR^{(i)}$ consécutifs ayant une composition différente, et où X représente un ligand adapté pour la formation de polymères de coordination. Le procédé comprend les étapes successives suivantes:

- la fourniture de sel de ligand X et de sels de $TR^{(i)}$, le sel de ligand X étant fourni de telle sorte à être au moins en proportions stoechiométriques par rapport à l'ensemble cumulé des $TR^{(i)}$ pour la formation des polymères de coordination $(TR^{(i)}X)_\infty$ ;
- le mélange du sel de $TR^{(0)}$ avec le sel de ligand X, pour former par précipitation un précipité de polymère de coordination de formule $(TR^{(0)}X)_\infty$ ;
- l'ajout du sel de $TR^{(j+1)}$, pour tout j allant de 0 à N-1, afin de former par précipitation et croissance épitaxiale ladite (j+1)$^{ème}$ enveloppe $(TR^{(j+1)}X)_\infty$ recouvrant $(TR^{(j)}X)_\infty$;

Dans le cas où au moins deux des $TR^{(i)}$ comprennent au moins un cation terre rare luminescent, ce procédé est adapté pour obtenir une poudre selon l'invention. Les modes de réalisations particuliers et/ou préférentiels ci-dessous du procédé sont donc adaptés pour obtenir une poudre selon l'invention.

Le mélange du sel de $TR^{(0)}$ avec le sel de ligand X permet de former par précipitation un précipité de polymère de coordination de formule $(TR^{(0)}X)_\infty$. Cette première étape permet de créer le coeur des particules de la poudre.

Ensuite par récurrence, pour tout j allant de 0 à N-1, une fois $(TR^{(j)}X)_\infty$ ayant sensiblement complètement précipité, le sel de $TR^{(j+1)}$ est ajouté au milieu réactionnel et précipite pour former la (j+1)$^{ème}$ enveloppe $(TR^{(j+1)}X)_\infty$ recouvrant $(TR^{(j)}X)_\infty$. Les polymères de coordination $(TR^{(i)}X)_\infty$ ont une même structure cristalline et des paramètres de maille proches, ce qui autorise une croissance par épitaxie entre les différentes couches. Les $TR^{(i)}$ sont donc ajoutés dans un même milieu réactionnel comprenant le ligand X qui est au moins en proportions stoechiométriques par rapport à l'ensemble cumulé des $TR^{(i)}$ pour la formation des polymères de coordination $(TR^{(i)}X)_\infty$. On entend par « au moins en proportions stoechiométriques » le fait que X soit en proportions stoechiométriques ou en excès par rapport à l'ensemble cumulé des $TR^{(i)}$ pour la formation des polymères de coordination $(TR^{(i)}X)_\infty$. Ce procédé permet notamment d'obtenir des particules homogènes et de taille d'ordre micrométrique.

Le ligand X peut être choisi dans la famille des benzène-carboxylates, substitués ou non. Préférentiellement, le ligand X a pour formule :

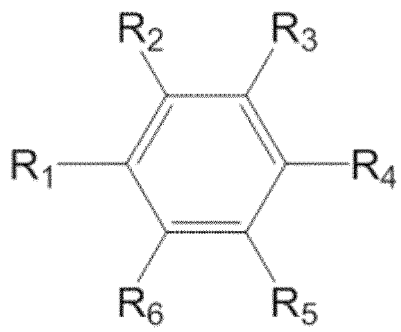

où $-R_1$ est choisi parmi les groupements $-CO_2H$, $-PO(OH)_2$, $-SO_3H$, $-B(OH)_2$ et où $-R_2$, $-R_3$, $-R_4$, $-R_5$ et $-R_6$ sont choisis indépendemment parmi la liste des groupements suivants: alkyle, $-CO_2H$, $-PO(OH)_2$, $-SO_3H$, $-B(OH)_2$, -H, $-NH_2$, $-OCH_3$, $-NO_2$, -OH, -Cl, -F, -Br, -I, -CN, $-O^-$ et $-N(CH_3)_2$.

Le contre-ion du sel de ligand X peut être choisi parmi : $Na^+$, $K^+$, $NH_4^+$ ou tout autre cation dont le sel de ligand est raisonnablement soluble dans l'eau ou les alcools.

Le contre-ion des sels de $TR^{(i)}$ peut être choisi parmi : $Cl^-$, $NO_3^-$ ou tout autre anion dont le sel de terre rare est soluble dans l'eau ou les alcools. Dans les modes de réalisation où un $TR^{(i)}$ est un mélange de cations trivalents de terres rares, un sel pour chaque cation trivalent de terre rare est utilisé.

Le solvant du milieu réactionnel peut être choisi parmi : l'eau et les alcools, notamment les alcools de faibles masses molaires tels le méthanol, l'éthanol ou encore le propanol. Pour un usage industriel, l'eau est préférentiellement utilisée comme solvant.

Avantageusement, le mélange du sel de $TR^{(0)}$ avec le sel de ligand X est mis en oeuvre en une seule fois par mélange direct. Ceci permet de former de manière rapide les noyaux de nucléation du coeur des particules de la poudre.

Avantageusement, l'ajout des sels de $TR^{(j+1)}$ pour tout j allant de 0 à N-1 est mis en oeuvre en goutte-à-goutte.

Le milieu réactionnel peut en outre être soumis à une forte agitation. Ceci permet d'éviter toute sursaturation locale et donc toute apparition de nouveaux noyaux de nucléation. En effet, selon le procédé les polymères $(TR^{(j+1)}X)_\infty$ précipitent et cristallisent par épitaxie sur les polymères déjà cristallisés $(TR^{(j)}X)_\infty$.

Selon le ligand X utilisé et la cinétique de formation des polymères $(TR^{(i)}X)_\infty$, un temps d'attente plus ou moins long peut être nécessaire entre les différentes étapes d'ajout de sels de terres rares afin de s'assurer que le sel de terre rare précédemment ajouté a sensiblement complètement précipité avant d'ajouter un nouveau sel de terre rare.

Afin de récupérer une poudre sèche, le procédé peut comprendre une étape finale de filtration et de séchage. Cette étape peut également être réalisée par lyophilisation. La technique de lyophilisation ne provoque pas le départ des molécules d'eau de coordination trop solidement attachées au squelette moléculaire, ce qui permet un séchage sans agglomération des grains microcristallins ni destruction de la structure cristalline. Le procédé de lyophilisation est, en outre, beaucoup moins coûteux énergétiquement qu'un séchage par chauffage en étuve suivi d'un broyage.

L'invention concerne également un matériau à base d'une matrice solide ou liquide et organique ou minérale, intégrant une poudre selon l'invention. La proportion de poudre dans le matériau est choisie de façon à permettre l'identification de celui-ci sans trop grever le coût de revient du matériau. En pratique, cette concentration sera avantageusement comprise entre 1 gramme par tonne et 10 grammes par tonne de matrice minérale.

L'invention concerne finalement l'utilisation d'une poudre selon l'invention ou d'un matériau la comprenant pour le traçage d'objets. La poudre peut notamment être utilisée pour marquer des objets afin de les identifier pour lutter contre la contrefaçon de ces objets.

## 5. Liste des figures

La Figure 1A est une vue en projection de l'unité asymétrique du composé $\{[Ln(cpbOH)[H_2O)_2](cpb)\}_\infty$.

La Figure 1B et la Figure 1C sont des vues en projection du composé $\{[Ln(cpbOH)(H_2O)_2](cpb)\}_\infty$, dans lesquelles les polyèdres de coordination des ions lanthanides ont été représentés, respectivement selon les directions c et *b*.

La Figure 2A représente les diagrammes de diffraction des rayons X des composés $\{[Ln(cpbOH)(H_2O)_2](cpb)\}_\infty$ avec Ln = Pr-Lu plus Y. La Figure 2B représente les paramètres de maille affinés sur poudre des composés $\{[Ln(cpbOH)(H_2O)_2](cpb)\}_\infty$ avec Ln = Pr-Lu plus Y en fonction du rayon ionique de l'ion lanthanide impliqué.

La Figure 3 représente schématiquement la structure d'une particule de poudre selon l'invention pour N=1.

La Figure 4 représente schématiquement la structure d'une particule de poudre selon l'invention pour N=2.

Les Figures 5A, 5B et 5C représentent des vues au microscope optique de poudres microcristallines contenant 50 % de terbium et 50 % d'europium sous irradiation UV ($\lambda_{exc}$ = 312nm) de composition respective :

i) $(\{[Tb(cpbOH)(H_2O)_2](cpb)\}_\infty)_{0.5}$@$(\{[Eu(cpbOH)(H_2O)_2](cpb)\}_\infty)_{0.5}$ ;
ii) $(\{[Tb_{0.5}Eu_{0.5}(cpbOH)(H_2O)_2](cpb))\}_\infty)$ ; et,
iii) 0.5 $\{[Tb(cpbOH)(H_2O)_2](cpb)\}_\infty$ + 0.5 $\{[Eu(cpbOH)(H_2O)_2](cpb)\}_\infty$.

La Figure 6A représente les coordonnées colorimétriques (xy) des trois produits des Figures 5A, 5B et 5C et la Figure 6B les diffractogrammes de ces produits comparés au diffractogramme théorique de $\{[Tb(cpbOH)(H_2O)_2](cpb)\}_\infty$ (noté TbCPB) simulé.

Les Figures 7A et 7B représentent des photographies par MEB de poudres microcristallines de l'exemple 1 séchée respectivement : i) à l'air et ii) par lyophilisation.

Les Figure 8A et 8B représentent des diagrammes de diffraction des rayons X avant et après lyophilisation respectivement : i) de la poudre microcristalline selon l'exemple 1 et ii) de la poudre microcristalline de l'exemple comparatif 2.

La Figure 9 représente les diffractogrammes respectifs de :

i) $(\{[Lu(cpbOH)(H_2O)_2](cpb)\}_\infty)_{0.5}$@$(\{[Y(cpbOH)(H_2O)_2](cpb)\}_\infty)_{0.5}$ séché par lyophilisation;
ii) $(\{[Lu(cpbOH)(H_2O)_2](cpb)\}_\infty)_{0.5}$@$(\{[Y(cpbOH)(H_2O)_2](cpb)\}_\infty)_{0.5}$ séché à l'air ;
iii) 0.5 $\{[Lu(cpbOH)(H_2O)_2](cpb)\}_\infty$ + 0.5 $\{[Y(cpbOH)(H_2O)_2](cpb)\}_\infty$; et,
iv) $\{[Tb(cpbOH)(H_2O)_2](cpb)\}_\infty$ (noté TbCPB) simulé.

La Figure 10 représente une cartographie EDS sur Y et Lu de la poudre de l'exemple 2 (spectre somme de la carte).

La Figure 11A représente une image électronique blanc/gris par contraste (Blanc : lutécium), la figure 11B représente une image EDS (orange : lutécium) et la Figure 11C représente une image EDS (bleu : yttrium). La Figure 11D est la superposition de l'image électronique et des images EDS Lu+Y des Figures 11A, 11B et 11C.

## 6. Description détaillée d'un mode de réalisation

### 6.1. Synthèse - Mode opératoire général pour la formation de polymères de coordinations ayant comme ligand le *4-carboxyphényl-boronique*

Pour synthétiser un polymère de coordination à partir d'un seul ion lanthanide, autrement dit homo-nucléaire, le schéma réactionnel est le suivant (Hcpb représente ici le ligand 4-carboxyphényl-boronique):

$$2\ \mathrm{Ln}^{3+} + 4\ \mathrm{cpb(OH)}^{2-} \xrightarrow{eau} 2\ \{[\mathrm{Ln(cpbOH)(H_2O)_2}]\cdot(\mathrm{cpb})\}_\infty$$

Le mélange (sel de lanthanide + sel de ligand) se fait en proportions stoechiométriques : typiquement 0.5 mmol de $Ln^{3+}$ dans 10 mL d'eau sont ajoutés à 1 mmol de $cpb^{2-}$ dissout dans 10 mL d'eau. On obtient instantanément un précipité microcristallin avec un rendement proche de 100 %.

Pour préparer un alliage hétéro-poly-lanthanide, 0.5 mmol d'un mélange de chlorure de terres rares dissous dans 10 mL d'eau sont ajoutés simultanément à 1 mmol de ligand $cpb^{2-}$ dissout dans 10 mL d'eau. L'alliage moléculaire est immédiatement obtenu sous forme d'un précipité microcristallin dans lequel tous les grains ont la même composition chimique.

Pour préparer une poudre microcristalline selon la présente invention, dont les particules sont de type « coeur-enveloppe », les différents ions lanthanides sont ajoutés successivement dans les proportions choisies (0.5 mmol au total) à une solution aqueuse contenant initialement 1 mmol de $cpb^{2-}$ dissous dans 10 mL d'eau. Les différentes fractions de solutions de chlorures de lanthanides sont ajoutées petit à petit lorsqu'on est certain que les ions lanthanides de la fraction précédente ont tous réagi. Les grains de précipité en suspension servent alors de points de nucléation et croissent par épitaxie 3D.

### 6.2. Isostructure des polymères homo-nucléaires

Les polymères de coordination homo-nucléaires de formule chimique générale $\{[Ln(cpbOH)(H_2O)_2](cpb)\}_\infty$ avec Ln = Pr-Lu plus Y ont été étudiés. Ils ont été obtenus selon le procédé général ci-dessus décrit. Ils ont été obtenus dans l'eau à température ambiante par réaction du sel de sodium de l'acide 1,4-carboxyphénylboronique et du chlorure d'un des ions lanthanides compris entre le praséodyme et le lutécium (sauf le prométhium) ou l'yttrium. Ces composés sont tous isostructuraux au composé $\{[Tb(cpbOH)(H_2O)_2]\text{-}(cpb)\}_\infty$.

En référence à la Figure 1A, le composé $\{[Ln(cpbOH)(H_2O)_2](cpb)\}_\infty$ cristallise dans un système orthorhombique, avec comme paramètres de maille : *a* = 8.5704(1) (Å) ; *b* = 19.5441(1) (Å) ; *c* = 21.4191(3) (Å) ; et, *V* = 3587.71(7) $Å^3$, *Z* = 8 et son groupe d'espace est *Pbca* (n° 61). Les Figures 1B et 1C représentent en particulier les polyèdres de coordination des ions lanthanides selon respectivement les directions *c* et *b*. En référence au diagrammes de diffraction de la Figure 2A, les polymères de coordination $\{[Ln(cpbOH)(H_2O)_2](cpb)\}_\infty$ , avec Ln = Pr-Lu plus Y, sont bien isostructuraux. De plus, en référence à la Figure 2B, les paramètres de maille des polymères de coordination $\{[Ln(cpbOH)(H_2O)_2](cpb)\}_\infty$ varient peu et sont très proches les uns des autres.

### 6.3. Exemple 1 : Synthèse de particules bi-couches de $(\{[Tb(cpbOH)(H_2O)_2](cpb)\}_\infty)_{0.5}@(\{[Eu(cpbOH)(H_2O)_2](cpb)\}_\infty)_{0.5}$

#### 6.3.1-Synthèse du coeur à base de terbium

A 10 mL d'une solution aqueuse du sel de sodium de l'acide 1,4-carboxyphénylboronique $(Na(cpb)\cdot 1{,}5H_2O)$ (1 mmol), on ajoute en une fois, à la micropipette, 1.25 mL d'une solution aqueuse de chlorure de terbium 0.2 $mol.L^{-1}$, soit 0.25 mmol. La précipitation se produit immédiatement. Pour s'assurer que le rendement est proche de 100%, la solution est maintenue sous agitation modérée (600 tours par minute) à température ambiante pendant 1 heure.

#### 6.3.2-Synthèse de l'enveloppe à base d'europium

Une solution diluée de chlorure d'europium (0.25 mmol dans 20 mL d'eau) est alors ajoutée goutte à goutte (0.33 $mL.min^{-1}$) sous forte agitation (1000 tours par minute) pour éviter toute surconcentration locale et donc toute apparition de nouveaux noyaux de nucléation. A l'issue de l'addition, le mélange est maintenu 5 heures sous agitation.

La poudre bi-couches ainsi formée, notée ici : $(\{[Tb(cpbOH)(H_2O)_2](cpb)\}_\infty)_{0.5}@(\{[Eu(cpbOH)(H_2O)_2](cpb)\}_\infty)_{0.5}$ est ensuite filtrée et séchée à température ambiante. En référence à la Figure 3, les particules, notées 1, de cette poudre ont donc un coeur, noté 2, formé par un polymère de coordination à base de Tb(III) et une enveloppe, notée 3,

formée par un polymère de coordination à base d'Eu(III).

### 6.4-Caractérisation de la poudre synthétisée selon l'Exemple 1 et comparaison avec des exemples comparatifs

Deux exemples comparatifs ont servi de comparaison à la poudre synthétisée. L'exemple comparatif 1 est un alliage moléculaire hétéro-dinucléaire Tb(III)-Eu(III) noté : $\{[Tb_{0.5}Eu_{0.5}(cpbOH)(H_2O)_2](cpb))\}_\infty$.

L'exemple comparatif 2 est un mélange physique post-synthétique d'une poudre de composé homo-nucléaire à base d'europium et d'une poudre homo-nucléaire à base de terbium noté : 0.5 $\{[Tb(cpbOH)(H_2O)_2](cpb)\}_\infty$ + 0.5 $\{[Eu(cpbOH)(H_2O)_2](cpb)\}_\infty$.

Le tableau 1 ci-dessous indique la composition exacte en terbium(III) et en europium(III) des différentes poudres obtenue par EDS :

**Tableau 1**

| | %Tb(III) | %Eu(III) |
|---|---|---|
| Exemple 1 | 47(2) | 53(2) |
| Exemple comparatif 1 | 55(2) | 45(2) |
| Exemple comparatif 2 | 48(2) | 52(2) |

Comme le montrent les Figures 5A, 5B, 5C et 6, la poudre microcristalline selon l'exemple 1 est isostructurale aux poudres des exemples comparatifs 1 et 2 et, placée sous une irradiation UV ($\lambda_{exc}$ = 312 nm), émet dans le jaune. Ceci montre que la luminescence jaune observée n'est pas due à la superposition de grains émettant dans le vert (ceux à base de terbium $Tb^{3+}$) et de grains émettant dans le rouge (ceux à base d'europium $Eu^{3+}$). Ceci montre également qu'il n'y a pas, comme dans le cas des alliages moléculaires hétéro-dinucléaires Eu/Tb de transfert d'énergie du terbium vers l'europium.

Comme le montrent les Figure 5A, 5B et 5C, où les poudres ont été séchées à l'air, les poudres présentent une agglomération de grains microcristallins et ne permettent pas l'observation de grains isolés. Dans la mesure où ces composés ne contiennent pas d'eau de cristallisation mais uniquement de l'eau de coordination, il est possible de sécher ces poudres par lyophilisation. Cette technique, qui ne provoque pas le départ des molécules d'eau de coordination trop solidement attachées au squelette moléculaire, permet un séchage sans agglomération des grains microcristallins ni destruction de la structure cristalline. Ceci est clairement visible sur les Figures 7A, 7B, 8A et 8B. Le procédé de lyophilisation est, en outre, beaucoup moins coûteux énergétiquement qu'un séchage en étuve suivi d'un broyage.

### 6.5. Exemple 2 : Synthèse de particules bi-couches de $(\{[Lu(cpbOH)(H_2O)_2](cpb)\}_\infty)_{0.5}$@$(\{[Y(cpbOH)(H_2O)_2](cpb)\}_\infty)_{0.5}$

La poudre de l'exemple 2 a été synthétisée selon un procédé similaire à celui utilisé pour la synthèse de la poudre de l'exemple 1, sauf qu'un sel de lutécium a été utilisé au lieu d'un sel de terbium pour le coeur et qu'un sel d'yttrium a été utilisé au lieu d'un sel d'europium pour l'enveloppe.

La poudre de l'exemple 2 est notée :

$$(\{[Lu(cpbOH)(H_2O)_2](cpb)\}_\infty)_{0.5}@(\{[Y(cpbOH)(H_2O)_2](cpb)\}_\infty)_{0.5}.$$

Les deux ions ($Y^{3+}$ et $Lu^{3+}$) ont des rayons ioniques assez proches (1.072 Å et 1.032 Å respectivement) et des numéros atomiques très différents (39 et 71 respectivement).

### 6.6. Caractérisation de la poudre synthétisée selon l'Exemple 2 et comparaison avec des exemples comparatifs

Deux exemples comparatifs ont servi de comparaison à la poudre synthétisée. L'exemple comparatif 3 est un alliage moléculaire hétéro-dinucléaire Lu(III)-Y(III) noté :

$$\{[Lu_{0.5}Y_{0.5}(cpbOH)(H_2O)_2](cpb))\}_\infty.$$

L'Exemple comparatif 4 est un mélange physique post-synthétique d'une poudre de composé homo-nucléaire à base de lutécium et d'une poudre de composé homo-nucléaire à base d'yttrium noté :

$0.5\ \{[Lu(cpbOH)(H_2O)_2](cpb)\}_\infty + 0.5\ \{[Y(cpbOH)(H_2O)_2](cpb)\}_\infty$.

Le diagramme de diffraction des rayons X (Figure 9) montre que tous les composés présentent le même diagramme de diffraction.

La Figure 10 représente une analyse EDS de la poudre de l'exemple 2. Les images obtenues par MET (Figures 11A, 11B, 11C, 11D) montrent très clairement que les grains de la poudre selon l'exemple 2 présentent un noyau clair (correspondant au $Lu^{3+}$) entouré d'un halo plus foncé (correspondant à l'$Y^{3+}$). Les cartographies réalisées montrent bien la présence de lutécium au coeur du grain et celle d'yttrium à sa périphérie.

Les dimensions relatives du coeur et de l'épaisseur de l'enveloppe dépendent bien sûr des proportions relatives des ions lanthanides utilisées lors de chaque ajout. En prenant une géométrie de grain sphérique et en considérant que les mailles du composé qui constitue le coeur du grain et de celui qui constitue la couche externe sont quasi-identiques, il est possible d'évaluer ces dimensions relatives. Le volume et le nombre de moles dans cette hypothèse sont parfaitement proportionnels.

Donc

$$V_{coeur}=4/3\ \pi r_{coeur}^3=x \text{ et } V_{enveloppe}=4/3\ \pi(r_{grain}^3-r_{coeur}^3)=1-x.$$

Donc, si par exemple x = 0.5 ($V_{coeur} = V_{enveloppe}$) on obtient : $r_{coeur}=\sqrt[3]{(1/2)}\ r_{grain}$. L'épaisseur de la couche externe représente donc environ 20 % du rayon du grain sphérique. Ce calcul peut bien sûr être adapté à des particules présentant plus d'une enveloppe.

### 6.7. Exemple 3 : Synthèse de particules tri-couches de $(\{[Tb(cpbOH)(H_2O)_2](cpb)\}_\infty)_{0.1}@(\{[Y(cpbOH)(H_2O)_2](cpb)\}_\infty)_{0.1}@(\{[Eu(cpbOH)(H_2O)_2](cpb)\}_\infty)_{0.8}$

Il est possible de fabriquer des composés tri-couches et d'une façon plus générale multi-couches. Outre le fait d'augmenter encore le nombre de composés qui constituent cette famille, l'insertion d'une troisième couche entre le coeur et l'enveloppe externe du composé présente l'intérêt de séparer complètement le coeur de l'enveloppe externe et donc d'éviter tout transfert d'énergie intermétallique entre les ions contenus dans le coeur et ceux contenus dans l'enveloppe externe.

Les proportions entre les différents éléments dans la présente synthèse ont été choisies pour deux raisons. Premièrement, compte tenu de l'efficacité des transferts intermétalliques observée dans les alliages moléculaires, l'observation de la luminescence du terbium indique sans ambiguïté que les ions $Eu^{3+}$ et $Tb^{3+}$ sont séparés les uns des autres. Deuxièmement, avec les proportions utilisées, les épaisseurs des trois couches doivent être sensiblement les mêmes (sur la base du modèle grossier développé au point 6.6).

#### 6.7.1- Synthèse du coeur à base de terbium

A 15 mL d'une solution aqueuse du sel de sodium de l'acide 1,4-carboxyphenylboronique ($Na(cpb)\cdot 1,5H_2O$) (1 mmol), on ajoute en une fois, à la micropipette, 0.25 mL d'une solution aqueuse de chlorure de terbium à 0.2 $mol.L^{-1}$, soit 0.05 mmol. La précipitation se produit immédiatement. Pour s'assurer que le rendement est proche de 100%, la solution est maintenue sous agitation modérée (600 tours par minute) à température ambiante pendant 1 heure.

#### 6.7.2- Synthèse de la première enveloppe à base d'yttrium

Une solution diluée de chlorure d'yttrium (0.05 mmol dans 15mL d'eau) est ensuite ajoutée goutte à goutte (0.33 $mL.min^{-1}$) sous agitation soutenue (800 tours par minute) pour éviter toute sursaturation locale et donc toute apparition de nouveaux noyaux de nucléation. A l'issue de l'addition, la solution est maintenue 1 h sous agitation à température ambiante pour s'assurer que le rendement est proche de 100%. A ce stade, les grains sont tous constitués d'un coeur à base de terbium et d'une première enveloppe à base d'yttrium.

#### 6.7.3- Synthèse de la deuxième enveloppe, périphérique, à base d'europium

Une solution diluée de chlorure d'europium (0.40 mmol dans 17 mL d'eau) est alors ajoutée goutte à goutte (0.33 $mL.min^{-1}$) sous forte agitation (1000 tours par minute) pour éviter toute surconcentration locale. A l'issue de l'addition, le mélange est maintenu 5 heures sous agitation.

La poudre tri-couches ainsi formée, notée ici : ({[Tb(cpbOH)($H_2O$)$_2$](cpb))$_\infty$ )$_{0.1}$@({[Y(cpbOH)($H_2O$)$_2$](cpb)}$_\infty$)$_{0.1}$@({[Eu(cpbOH)($H_2O$)$_2$](cpb)}$_\infty$)$_{0.8}$, est ensuite filtrée et séchée à température ambiante. En référence à la Figure 4, les particules de cette poudre ont donc un coeur formé par un polymère de coordination à base de Tb(III), une première enveloppe formée par un polymère de coordination à base d'Y(III), et une deuxième enveloppe, périphérique, formée par un polymère de coordination à base d'Eu(III).

### 6.8. Caractérisation de la poudre selon l'exemple 3

Le diagramme de diffraction des rayons X (non représenté) confirme que la structure cristalline est bien identique à celle des composés homo-nucléaires et l'analyse par EDS (non représentée) de la poudre que les trois ions lanthanides sont présents dans les bonnes proportions. La microscopie optique (non représentée) sous irradiation UV (312 nm) montre que tous les grains sont identiques du point de vue de leurs propriétés de luminescence. Une luminescence rouge est observée car l'europium est dans la composition très fortement majoritaire.

En référence à la Figure 12, le spectre de luminescence du composé selon l'exemple 3 présente un faible pic caractéristique de la luminescence du terbium à 545 nm ainsi que des pics correspondant à l'europium. La présence de ce pic, même s'il est de faible intensité démontre que les ions terbiums sont séparés des ions europiums car dans ce système, le transfert d'énergie Tb->Eu est si efficace que dans les alliages moléculaires Tb/Eu, la luminescence du terbium disparait totalement dès que la teneur en europium atteint 40%.

### 6.9. Conclusion

Les exemples 1-3 montrent la faisabilité de composés bi-couches et tri-couches dans lesquels chaque couche est constituée par un polymère de coordination homo-terre rare. Il est évident que rien n'interdit de fabriquer des couches d'alliages moléculaires ce qui porterait le nombre de composés isostructuraux de compositions différentes qui constituent cette famille à plus de $10^{30}$ (~$10^6$ moles).

Le procédé selon l'invention permet de concevoir des systèmes multicouches dans lesquels chaque couche apporte sa contribution à l'émission sans risque de *quenching* intermétallique. Il est possible d'observer simultanément la luminescence de toutes les terres rares dans les domaines du visible et de l'IR, ce qui n'est le plus souvent pas le cas dans les alliages moléculaires monophasiques. Ainsi, des poudres selon l'invention peuvent être utilisées comme de véritables codes-barres luminescents.

Un domaine d'application particulièrement intéressant de ces propriétés est celui de la lutte anti-contrefaçon. L'analyse de traceur intégrant la poudre selon l'invention est beaucoup plus complexe que celle d'alliages hétéro-poly-terres rares de l'art antérieur. En effet, un nouveau paramètre, l'épaisseur des couches, influe sur l'intensité des différentes bandes du spectre. De plus, la microstructure du traceur initial ne peut pas être caractérisée par une méthode d'analyse comportant un broyage ou une dissolution.

## Revendications

**1.** Poudre formée de particules de type « coeur-enveloppe » comprenant un coeur et N enveloppe(s), où N est un entier supérieur ou égal à 1, ladite/lesdites enveloppe(s) recouvrant le coeur;

le coeur et ladite/lesdites enveloppe(s) comprenant chacun un polymère de coordination cristallin de formule respective $(TR^{(i)}X)_\infty$,
où pour tout i allant de 0 à N, $TR^{(i)}$ représente un cation trivalent de terre rare ou un mélange de cations trivalents de terres rares, les $TR^{(i)}$ consécutifs ayant une composition différente, au moins deux des $TR^{(i)}$ comprenant respectivement au moins un cation terre rare luminescent;
et où X représente un ligand adapté pour la formation de polymères de coordination; ladite poudre étant susceptible d'être obtenue par un procédé comprenant les étapes successives suivantes:

- la fourniture d'un sel de ligand X et de sels de $TR^{(i)}$, le sel de ligand X étant fourni de telle sorte à être au moins en proportions stoechiométriques par rapport à l'ensemble cumulé des $TR^{(i)}$ pour la formation des polymères de coordination$(TR^{(i)}X)_\infty$ ;
- le mélange du sel de $TR^{(0)}$ avec le sel de ligand X, pour former par précipitation un précipité de polymère de coordination de formule $(TR^{(0)}X)_\infty$ ; et,
- pour tout j allant de 0 à N-1, l'ajout du sel de $TR^{(j+1)}$ afin de former par précipitation et croissance épitaxiale ladite (j+1)$^{ème}$ enveloppe $(TR^{(j+1)}X)_\infty$ recouvrant $(TR^{(j)}X)_\infty$.

2. Poudre selon la revendication 1, dans laquelle N est un entier inférieur ou égal 5.

3. Poudre selon l'une quelconque des revendications précédentes, dans laquelle ledit ligand X est choisi dans la famille des benzène-carboxylates, substitués ou non ; ledit ligand X a préférentiellement pour formule :

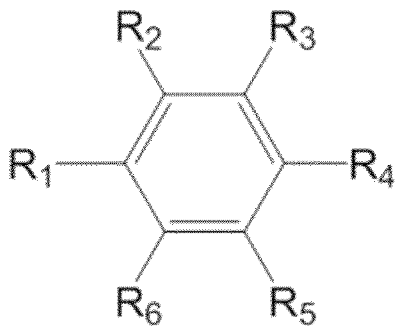

où $-R_1$ est choisi parmi les groupements $-CO_2H$, $-PO(OH)_2$, $-SO_3H$, $-B(OH)_2$ et où $-R_2$, $-R_3$, $- R_4$, $-R_5$ et $-R_6$ sont choisis indépendemment parmi la liste des groupements suivants: alkyle, $-CO_2H$, $-PO(OH)_2$, $-SO_3H$, $-B(OH)_2$, -H, $-NH_2$, $-OCH_3$, $-NO_2$, -OH, -Cl, -F, -Br, -I, -CN, $-O^-$ et $-N(CH_3)_2$.

4. Poudre selon l'une quelconque des revendications précédentes, dans laquelle le polymère de coordination du coeur $(TR^{(0)}X)_\infty$ comprend au moins un cation terre rare luminescent.

5. Poudre selon l'une quelconque des revendications précédentes, dans lequel les polymères de coordination $(TR^{(i)}X)_\infty$ sont des polymères homo-terre rare.

6. Poudre selon l'une quelconque des revendications précédentes, dans laquelle au moins un des polymères de coordination $(TR^{(i)}X)_\infty$ comprend au moins un cation terre rare luminescent dans le spectre visible.

7. Poudre selon l'une quelconque des revendications précédentes, dans laquelle N est supérieur ou égal à 2.

8. Poudre selon la revendication 7, dans laquelle au moins un des polymères de coordination $(TR^{(i)}X)_\infty$ ne contient qu'un cation terre rare non luminescent et sépare deux polymères de coordination $(TR^{(i-1)}X)_\infty$ et $(TR^{(i+1)}X)_\infty$ qui lui sont adjacents comprenant chacun au moins un cation terre rare luminescent.

9. Poudre selon l'une quelconque des revendications précédentes, dans laquelle les enveloppes ont une épaisseur moyenne inférieure ou égale à 500 nm, de préférence inférieure ou égale à 100nm.

10. Poudre selon l'une quelconque des revendications précédentes de granulométrie inférieure ou égale à 5 $\mu$m, de préférence inférieure ou égale à 1 $\mu$m.

11. Procédé pour la fabrication d'une poudre formée de particules de type « coeur-enveloppe » comprenant un coeur et N enveloppes, où N est un entier supérieur ou égal à 1, lesdites enveloppes recouvrant le coeur;

le coeur et lesdites enveloppes comprenant chacun un polymère de coordination de formule respective $(TR^{(i)}X)_\infty$, où pour tout i allant de 0 à N, $TR^{(i)}$ représente un cation trivalent de terre rare ou un mélange de cations trivalents de terres rares, les $TR^{(i)}$ consécutifs ayant une composition différente;
et où X représente un ligand adapté pour la formation de polymères de coordination; ledit procédé comprenant les étapes successives suivantes:

- la fourniture de sel de ligand X et de sels de TR(i), le sel de ligand X étant fourni de telle sorte à être au moins en proportions stoechiométriques par rapport à l'ensemble cumulé des $TR^{(i)}$ pour la formation des polymères de coordination $(TR^{(i)}X)_\infty$ ;
- le mélange du sel de $TR^{(0)}$ avec le sel de ligand X, pour former par précipitation un précipité de polymère de coordination de formule $(TR^{(0)}X)_\infty$ ; et,
- pour tout j allant de 0 à N-1, l'ajout du sel de $TR^{(j+1)}$ afin de former par précipitation et croissance épitaxiale ladite $(j+1)^{ème}$ enveloppe $(TR^{(j+1)}X)_\infty$ recouvrant $(TR^{(j)}X)_\infty$.

**12.** Poudre selon l'une quelconque des revendications 1 à 10, ladite poudre étant susceptible d'être obtenue par ledit procédé de la revendication 11, ledit procédé comprenant l'ajout du sel de $TR^{(j+1)}$ pour tout j allant de 0 à N-1 en goutte-à-goutte.

**13.** Poudre selon l'une quelconque des revendications 1 à 10, ladite poudre étant susceptible d'être obtenue par ledit procédé de la revendication 11, ledit procédé comprenant en outre une étape finale de filtration et séchage.

**14.** Matériau à base d'une matrice minérale solide ou liquide, organique ou minérale, intégrant une poudre selon l'une quelconque des revendications 1 à 10, 12 ou 13.

**15.** Utilisation d'une poudre selon l'une quelconque des revendications 1 à 10, 12 ou 13, ou d'un matériau la comprenant, pour le traçage d'objets.

## Patentansprüche

**1.** Pulver, das aus "Kern-Hülle"-Teilchen gebildet ist, umfassend einen Kern und N Hülle(n), wobei N eine ganze Zahl größer oder gleich 1 ist, wobei die Hülle(n) den Kern bedeckt/bedecken;

wobei der Kern und die Hülle(n) jeweils ein kristallines Koordinationspolymer der jeweiligen Formel $(TR^{(i)}X)_\infty$ umfassen,
wobei für jedes i von 0 bis N $TR^{(i)}$ ein dreiwertiges Seltenerdkation oder ein Gemisch aus dreiwertigen Seltenerdkationen darstellt, wobei aufeinanderfolgende $TR^{(i)}$ eine unterschiedliche Zusammensetzung haben, wobei mindestens zwei der $TR^{(i)}$ jeweils mindestens ein lumineszierendes Seltenerdkation umfassen;
und wobei X einen Liganden darstellt, der für die Bildung von Koordinationspolymeren geeignet ist; wobei das Pulver geeignet ist, durch ein Verfahren erhältlich zu sein, das die folgenden aufeinanderfolgenden Schritte umfasst:

- Bereitstellung eines Salzes des Liganden X und von $TR^{(i)}$-Salzen, wobei das Salz des Liganden X so bereitgestellt wird, dass es zumindest in stöchiometrischen Anteilen an der kumulativen Gesamtheit der $TR^{(i)}$ für die Bildung von Koordinationspolymeren $(TR^{(i)}X)_\infty$ vorliegt;
- Mischen des $TR^{(0)}$-Salzes mit dem Salz des Liganden X, um durch Ausfällung einen Niederschlag des Koordinationspolymers der Formel $(TR^{(0)}X)_\infty$ zu bilden; und,
- für jedes j von 0 bis N-1 die Zugabe des $TR^{(j+1)}$-Salzes, um durch Ausfällung und epitaktisches Wachstum die (j+1)-te $(TR^{(j)}X)_\infty$ überdeckende $(TR^{(j+1)}X)_\infty$-Hülle zu bilden.

**2.** Pulver nach Anspruch 1, wobei N eine ganze Zahl kleiner oder gleich 5 ist.

**3.** Pulver nach einem der vorhergehenden Ansprüche, wobei der Ligand X aus der Familie der substituierten oder unsubstituierten Benzolcarboxylate ausgewählt ist; wobei der Ligand X vorzugsweise die Formel hat:

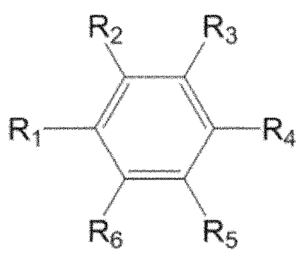

worin $-R_1$ aus den Gruppen $-CO_2H$, $-PO(OH)_2$, $-SO_3H$, $-B(OH)_2$ ausgewählt ist und wobei $-R_2$, $-R_3$, $-R_4$, $-R_5$ und $-R_6$ unabhängig voneinander aus der Liste der folgenden Gruppen ausgewählt sind: Alkyl, $-CO_2H$, $-PO(OH)_2$, $-SO_3H$, $-B(OH)_2$, -H, $-NH_2$, $-OCH_3$, $-NO_2$, -OH, -Cl, -F, -Br, -I, -CN, -0 und $-N(CH_3)_2$.

**4.** Pulver nach einem der vorhergehenden Ansprüche, wobei das Kernkoordinationspolymer (TR(0)X)∞ mindestens ein lumineszierendes Seltenerdkation umfasst.

**5.** Pulver nach einem der vorhergehenden Ansprüche, wobei die (TR(i)X)∞ Koordinationspolymere homo- Seltene

Erden-Polymere sind.

6. Pulver nach einem der vorhergehenden Ansprüche, wobei mindestens eines der $(TR^{(i)}X)_\infty$ -Koordinationspolymere mindestens ein Seltenerdkation umfasst, das im sichtbaren Spektrum lumineszierte.

7. Pulver nach einem der vorhergehenden Ansprüche, wobei N größer oder gleich 2 ist.

8. Pulver nach Anspruch 7, wobei mindestens eines der $(TR^{(i)}X)_\infty$ -Koordinationspolymere nur ein nicht lumineszierendes Seltenerdkation enthält und zwei ihm benachbarte $(TR^{(i-1)}X)_\infty$ - und $(TR^{(i+1)}X)_\infty$ -Koordinationspolymere voneinander trennt, die jeweils mindestens ein lumineszierendes Seltenerdkation umfassen.

9. Pulver nach einem der vorhergehenden Ansprüche, wobei die Hüllen eine durchschnittliche Dicke von weniger als oder gleich 500 nm, vorzugsweise weniger als oder gleich 100 nm, aufweisen.

10. Pulver nach einem der vorhergehenden Ansprüche mit einer Korngröße von weniger als oder gleich 5 $\mu$m, vorzugsweise weniger als oder gleich 1 $\mu$m.

11. Verfahren zur Herstellung eines Pulvers, das aus "Kern-Schale"-Partikeln gebildet ist, die einen Kern und N Schalen umfassen, wobei N eine ganze Zahl größer oder gleich 1 ist, wobei die Schalen den Kern bedecken;

    wobei der Kern und die Hüllen jeweils ein Koordinationspolymer jeweils der Formel (TR(i)X)∞ umfassen, wobei für jedes i von 0 bis N $TR^{(i)}$ ein dreiwertiges Seltenerdkation oder ein Gemisch aus dreiwertigen Seltenerdkationen darstellt, wobei aufeinanderfolgende $TR^{(i)}$ eine unterschiedliche Zusammensetzung haben;
    und wobei X einen Liganden darstellt, der für die Bildung von Koordinationspolymeren geeignet ist; wobei das Verfahren die folgenden aufeinanderfolgenden Schritte umfasst:

    - Bereitstellen von Salz des Liganden X und von TR(i)-Salzen, wobei das Salz des Liganden X so bereitgestellt wird, dass es zumindest in stöchiometrischen Anteilen in Bezug auf die kumulative Gesamtheit der $TR^{(i)}$ für die Bildung der $(TR^{(i)}X)_\infty$ -Koordinationspolymere vorliegt;
    - Mischen des $TR^{(0)}$-Salzes mit dem Salz des Liganden X, um durch Ausfällung einen Niederschlag des Koordinationspolymers der Formel $(TR^{(0)}X)_\infty$ zu bilden; und,
    - für jedes j von 0 bis N-1 die Zugabe des $TR^{(j+1)}$-Salzes, um durch Ausfällung und epitaktisches Wachstum die (j+1)-te $(TR^{(j)})X)_\infty$ überdeckende $(TR^{(j+1)})X)_\infty$-Hülle zu bilden.

12. Pulver nach einem der Ansprüche 1 bis 10, wobei das Pulver geeignet ist, um durch das Verfahren nach Anspruch 11 erhältlich zu sein, wobei das Verfahren die Zugabe des $TR^{(j+1)}$ -Salzes für jedes j von 0 bis N-1 in tropfenweiser Form umfasst.

13. Pulver nach einem der Ansprüche 1 bis 10, wobei das Pulver geeignet ist, um durch das Verfahren nach Anspruch 11 erhältlich zu sein, wobei das Verfahren außerdem einen abschließenden Schritt des Filterns und Trocknens umfasst.

14. Material auf der Basis einer festen oder flüssigen, organischen oder mineralischen Matrix, in die ein Pulver nach einem der Ansprüche 1 bis 10, 12 oder 13 integriert ist.

15. Verwendung eines Pulvers nach einem der Ansprüche 1 bis 10, 12 oder 13 oder eines Materials, das dieses Pulver enthält, zur Objektverfolgung.

## Claims

1. A powder formed by "core-shell" type particles comprising a core and N shell(s), where N is an integer greater than or equal to 1, said shell(s) covering the core;

    the core and said shell(s) each comprising a crystalline coordination polymer of the respective formula $(TR^{(i)}X)_\infty$, where for any i ranging from 0 to N, $TR^{(i)}$ represents a rare earth trivalent cation or a mixture of rare earth trivalent cations, the consecutive $TR^{(i)}$s having a different composition, at least two of the $TR^{(i)}$s respectively comprising at least one luminescent rare earth cation;

and where X represents a ligand adapted to the formation of coordination polymers;
said powder being likely to be obtained by a method comprising the following successive steps:

- providing a ligand X salt and $TR^{(i)}$ salts, the ligand X salt being provided so as to be at least in stoichiometric proportions with respect to the cumulative set of $TR^{(i)}$s for the formation of the coordination polymers $(TR^{(i)}X)_\infty$;
- mixing the $TR^{(0)}$ salt with the ligand X salt, to form a coordination polymer precipitate of the formula $(TR^{(0)}X)_\infty$ by precipitation; and,
- for any j ranging from 0 to N-1, adding the $TR^{(j+1)}$ salt in order to form said $(j+1)^{th}$ shell $(TR^{(j+1)}X)_\infty$ covering $(TR^{(j)}X)_\infty$ by precipitation and epitaxial growth.

**2.** The powder according to claim 1, wherein N is an integer lower than or equal to 5.

**3.** The powder according to any one of the preceding claims, wherein said ligand X is chosen from the substituted or unsubstituted benzene-carboxylate family; said ligand X has preferentially the formula:

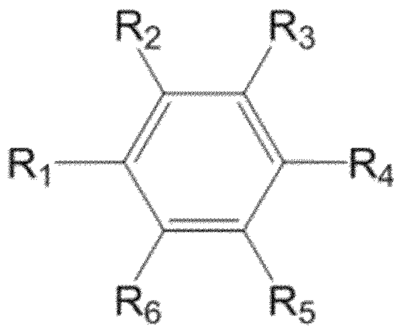

where $-R_1$ is chosen from $-CO_2H$, $-PO(OH)_2$, $-SO_3H$, $-B(OH)_2$ groups and where $-R_2$, $-R_3$, $-R_4$, $-R_5$ and $-R_6$ are independently chosen from the list of the following groups: alkyl, $-CO_2H$, $-PO(OH)_2$, $SO_3H$, $-B(OH)_2$, -H, $-NH_2$, $-OCH_3$, $-NO_2$, -OH, -Cl, -F, -Br, -I, -CN, $-O^-$ and $-N(CH_3)_2$.

**4.** The powder according to any one of the preceding claims, wherein the coordination polymer of the core $(TR^{(0)}X)_\infty$ comprises at least one luminescent rare earth cation.

**5.** The powder according to any one of the preceding claims, wherein the coordination polymers $(TR^{(i)}X)_\infty$ are homo-rare earth polymers.

**6.** The powder according to any one of the preceding claims, wherein at least one of the coordination polymers $(TR^{(i)}X)_\infty$ comprises at least one luminescent rare earth cation in the visible spectrum.

**7.** The powder according to any one of the preceding claims, wherein N is greater than or equal to 2.

**8.** The powder according to claim 7, wherein at least one of the coordination polymers $(TR^{(i)}X)_\infty$ only contains one non-luminescent rare earth cation and separates two coordination polymers $(TR^{(i-1)}X)_\infty$ and $(TR^{(i+1)}X)_\infty$ adjacent thereto each comprising at least one luminescent rare earth cation.

**9.** The powder according to any one of the preceding claims, wherein the shells have a mean thickness lower than or equal to 500 nm, preferably lower than or equal to 100 nm.

**10.** The powder according to any one of the preceding claims, having a grain size lower than or equal to 5 $\mu$m, preferably lower than or equal to 1 $\mu$m.

**11.** A method for manufacturing a powder formed by "core-shell" type particles comprising a core and N shells, where N is an integer greater than or equal to 1, said shells covering the core;

the core and said shells each comprising a coordination polymer of the respective formula $(TR^{(i)}X)_\infty$, where for any i ranging from 0 to N, $TR^{(i)}$ represents a rare earth trivalent cation or a mixture of rare earth trivalent cations,

the consecutive $TR^{(i)}$s having a different composition;
and where X represents a ligand adapted to the formation of coordination polymers;
said method comprising the following successive steps:

- providing a ligand X salt and $TR^{(i)}$ salts, the ligand X salt being provided so as to be at least in stoichiometric proportions with respect to the cumulative set of $TR^{(i)}$s for the formation of the coordination polymers $(TR^{(i)}X)_{\infty}$;
- mixing the $TR^{(0)}$ salt with the ligand X salt, to form a coordination polymer precipitate of the formula $(TR^{(0)}X)_{\infty}$ by precipitation; and,
- for any j ranging from 0 to N-1, adding the $TR^{(j+1)}$ salt in order to form said (j+1)th shell $(TR^{(j+1)}X)_{\infty}$ covering $(TR^{[j]}X)\infty$ by precipitation and epitaxial growth.

**12.** The powder according to any one of claims 1 to 10, said powder being likely to be obtained by said method of claim 11, said method comprising adding the $TR^{(j+1)}$ salt for any j ranging from 0 to N-1 dropwise.

**13.** The powder according to any one of claims 1 to 10, said powder being likely to be obtained by said method of claim 11, said method further comprising a final filtration and drying step.

**14.** A material based on an organic or mineral, solid or liquid mineral matrix, integrating a powder according to any of claims 1 to 10, 12 or 13.

**15.** A use of a powder according to any of claims 1 to 10, 12 or 13, or of a material comprising it, for tracing objects.

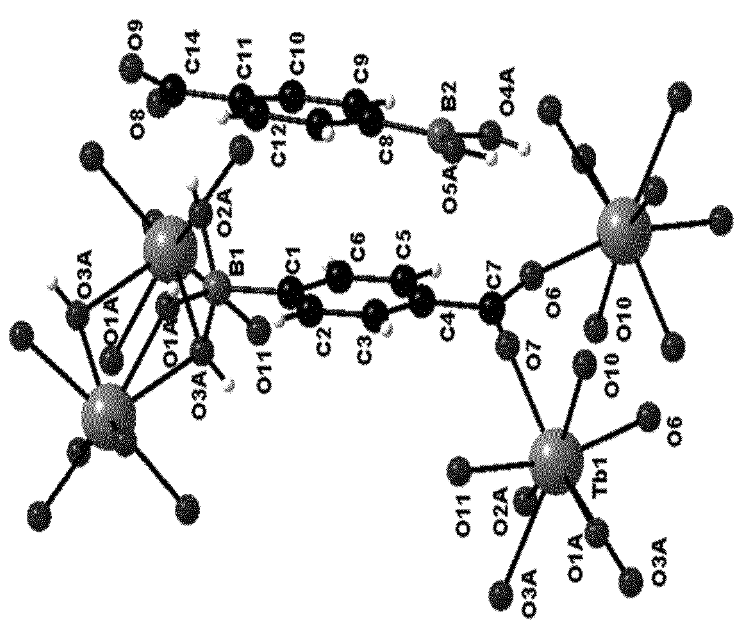

Figure 1A

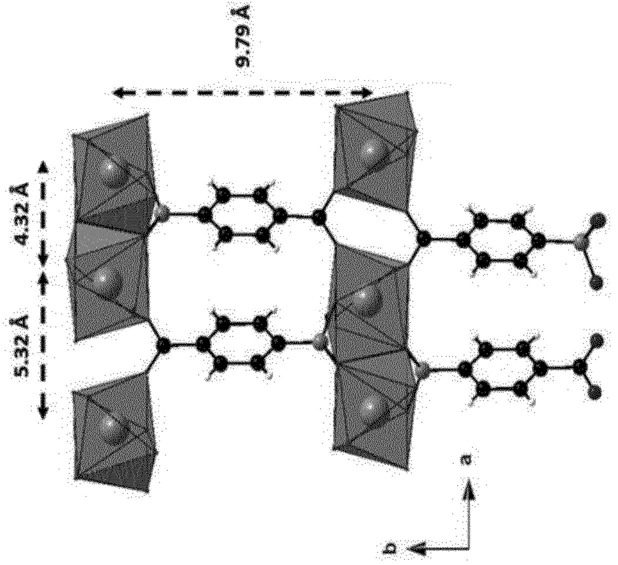


Figure 1B

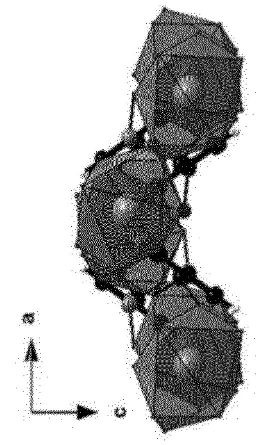


Figure 1C

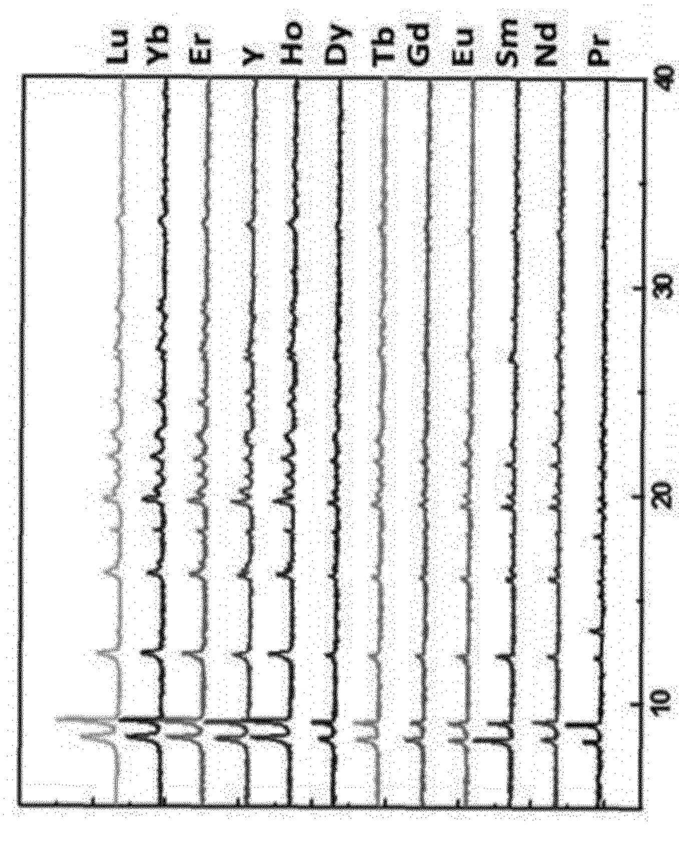


Figure 2A

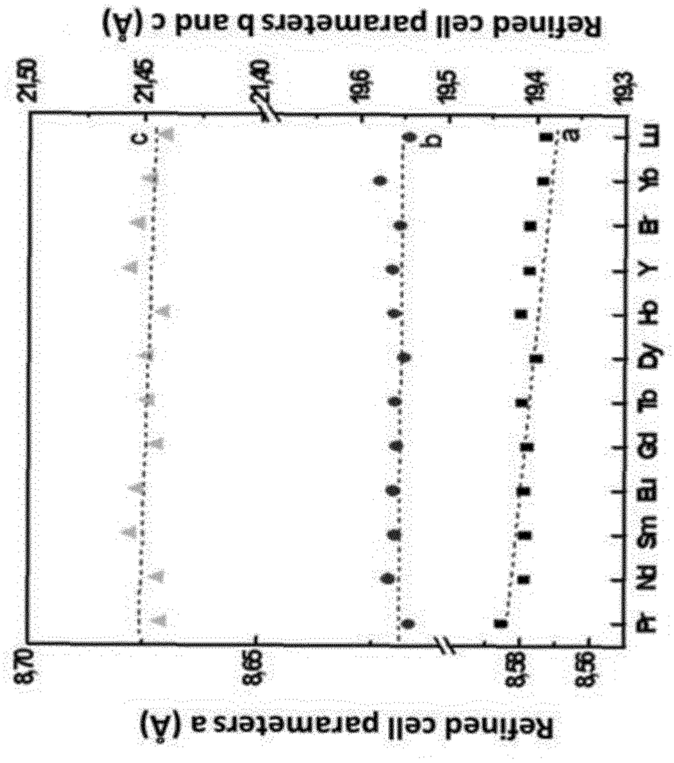


Figure 2B

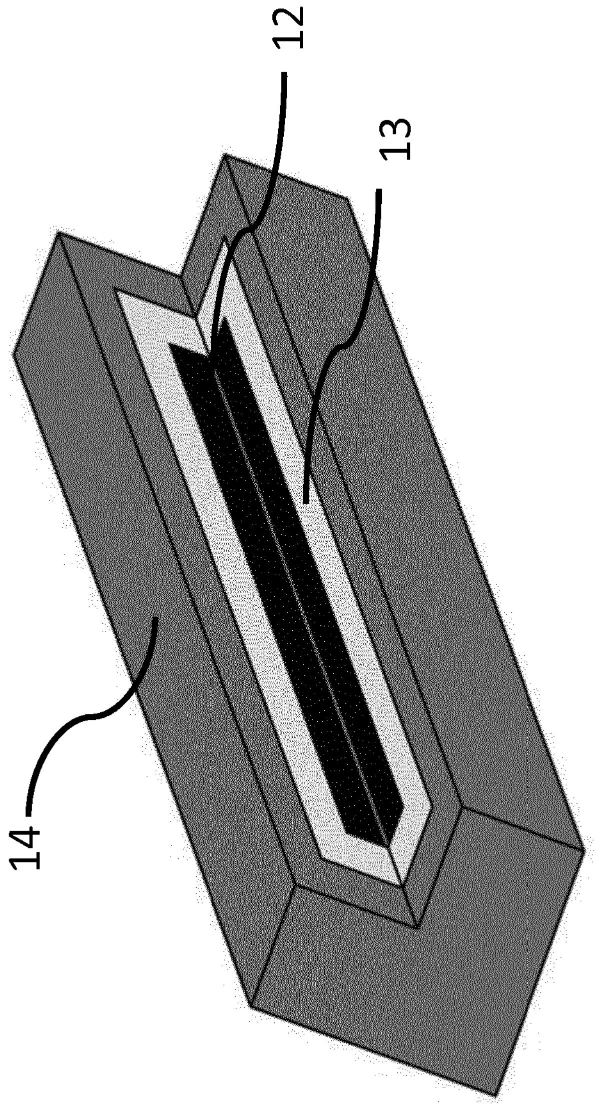

Figure 4

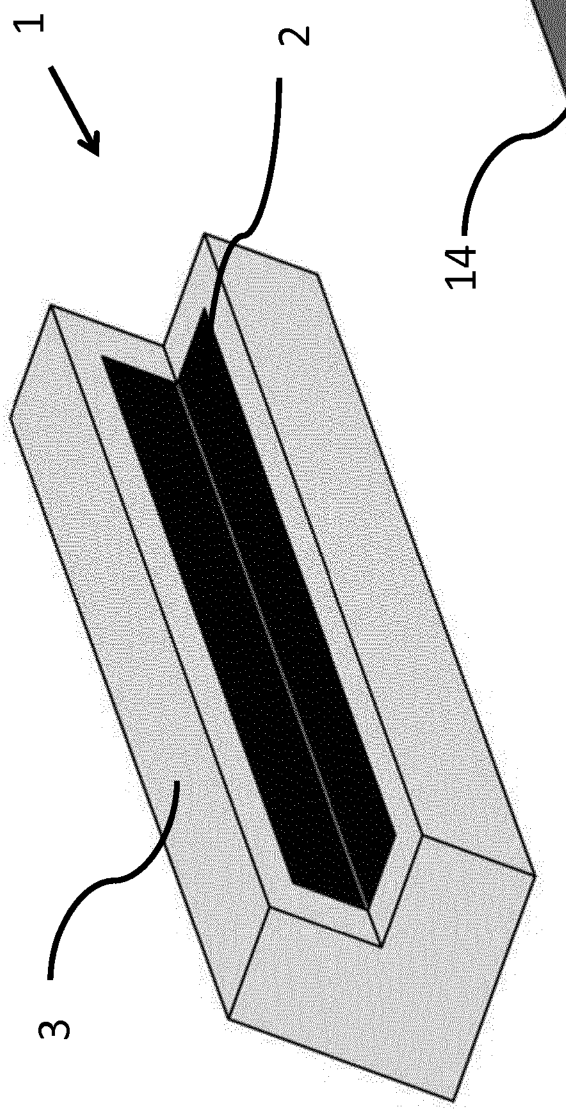

Figure 3

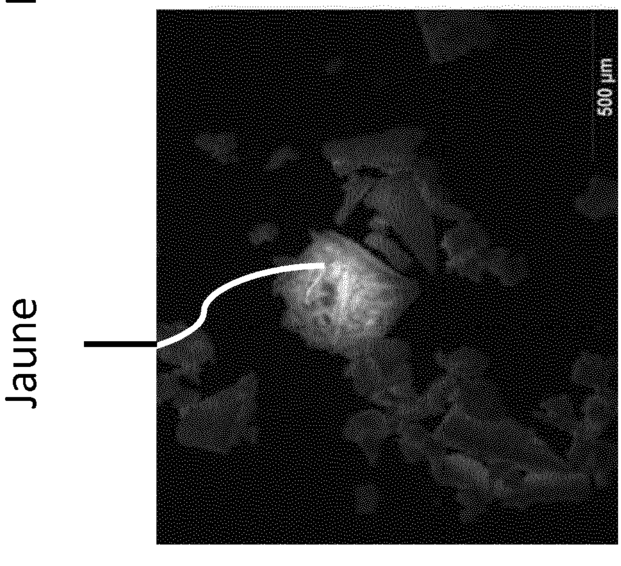


Figure 5A

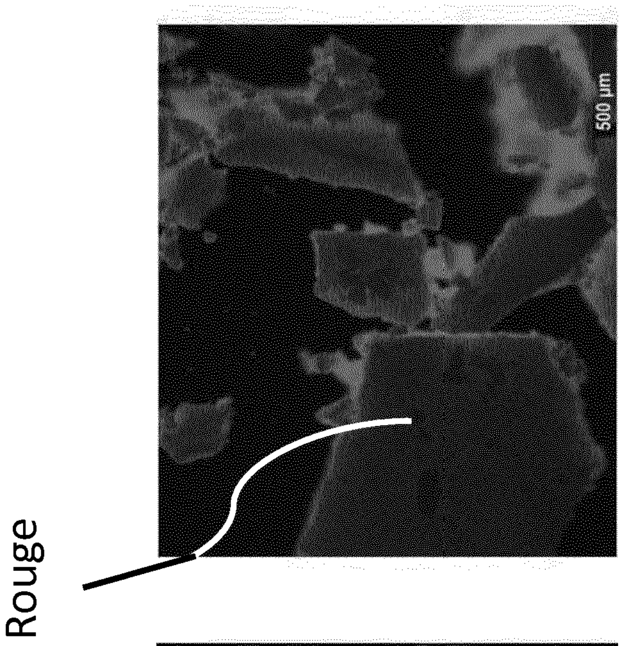


Figure 5B

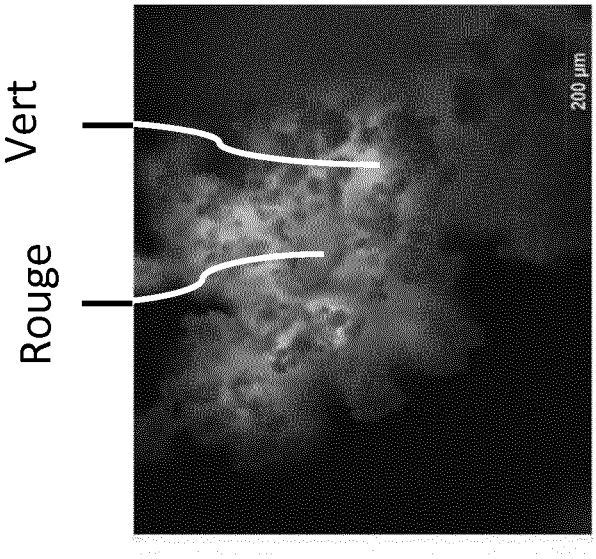


Figure 5C

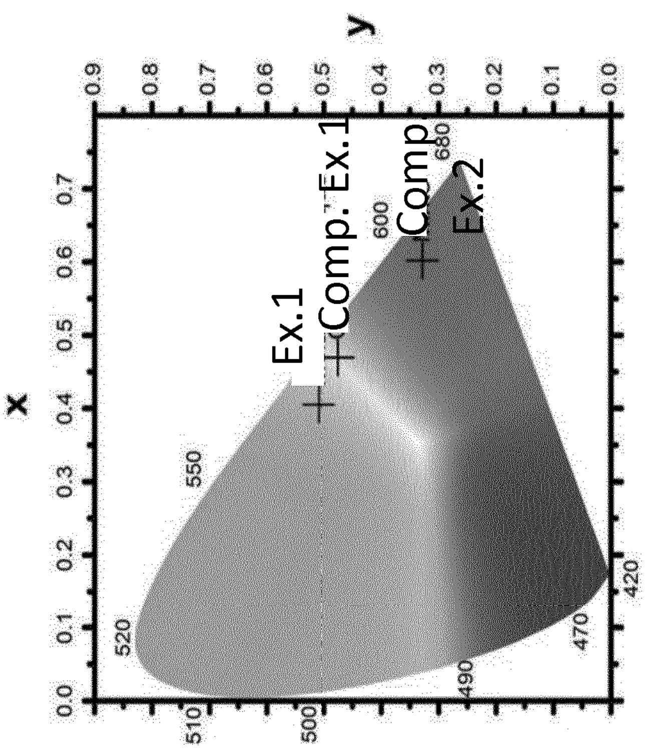


Figure 6A

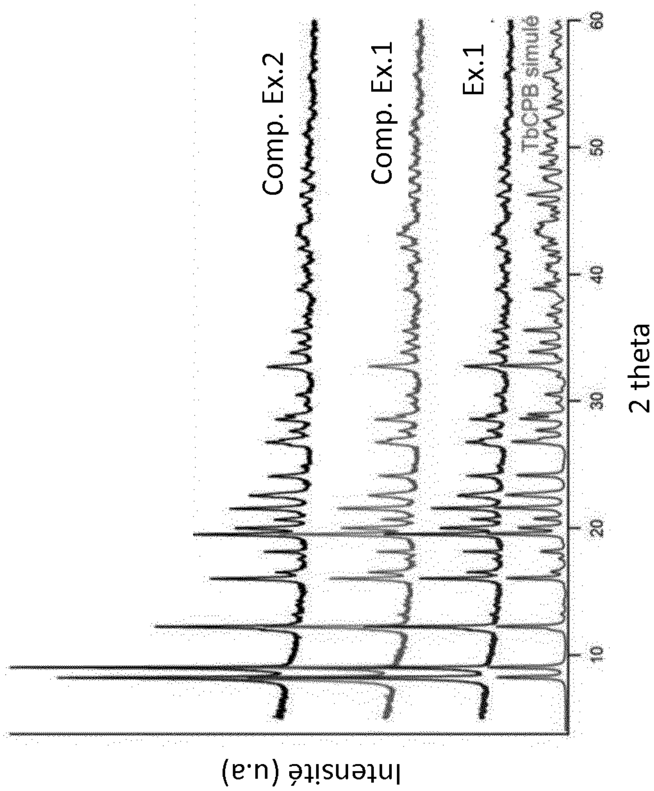


Figure 6B

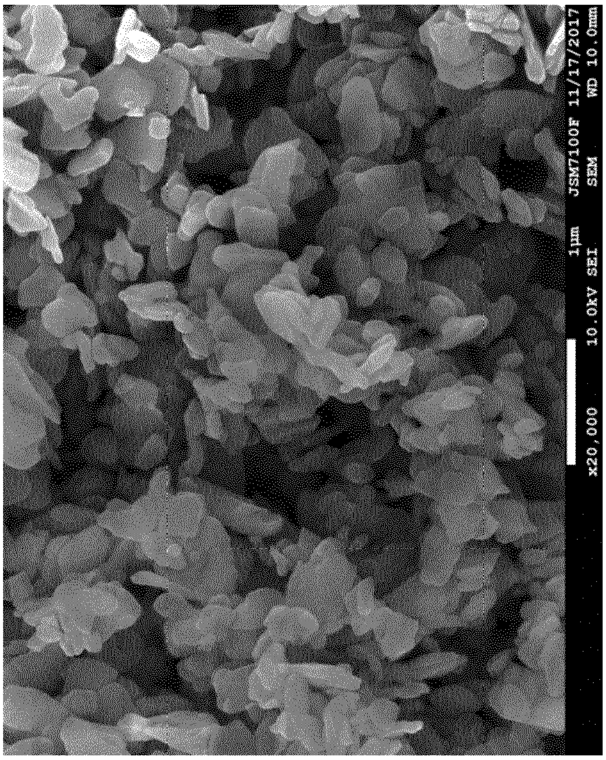


Figure 7A

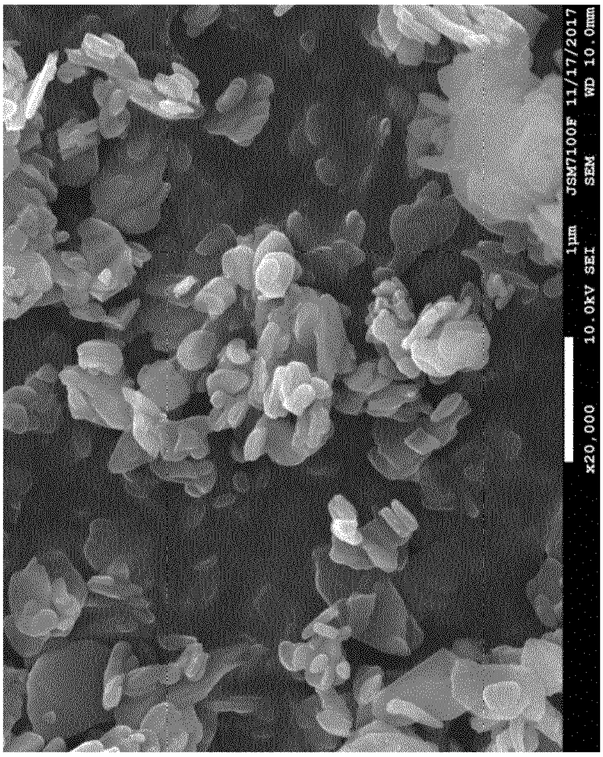


Figure 7B

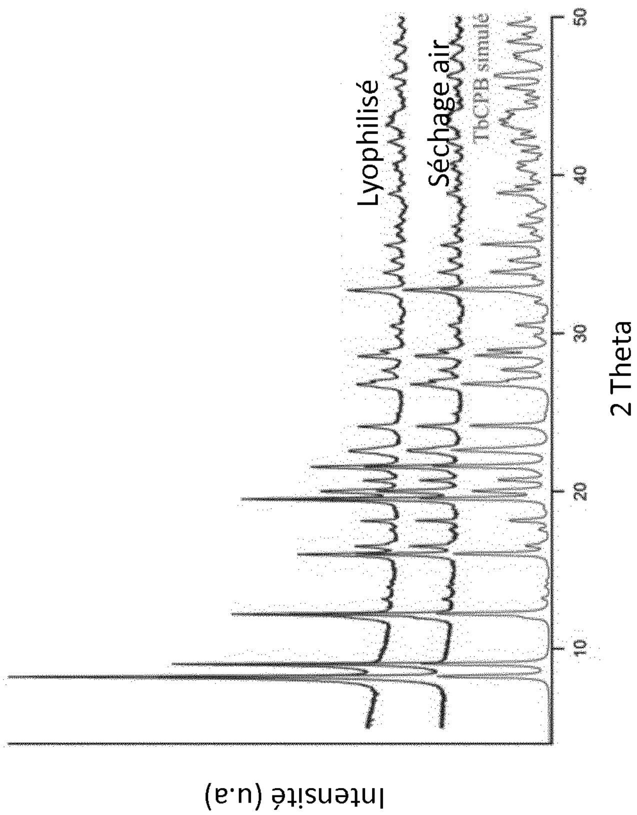


Figure 8A

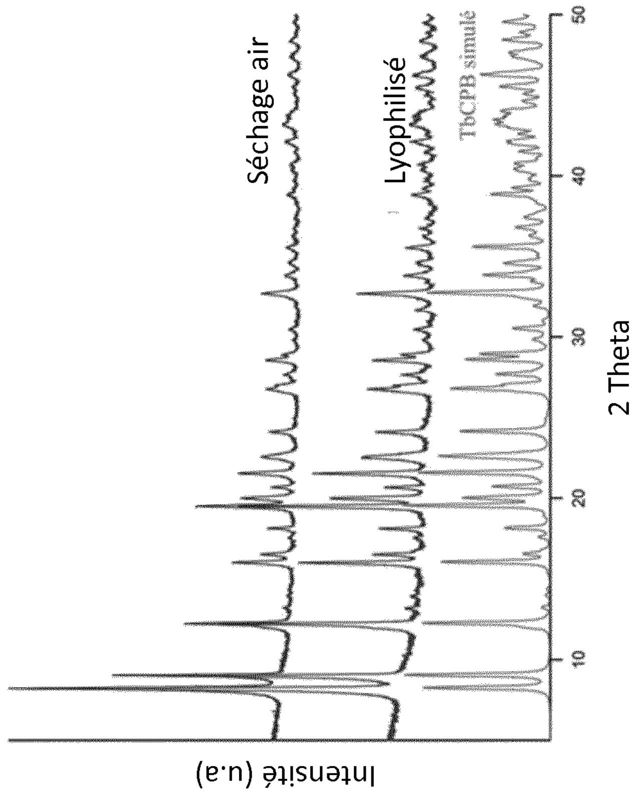


Figure 8B

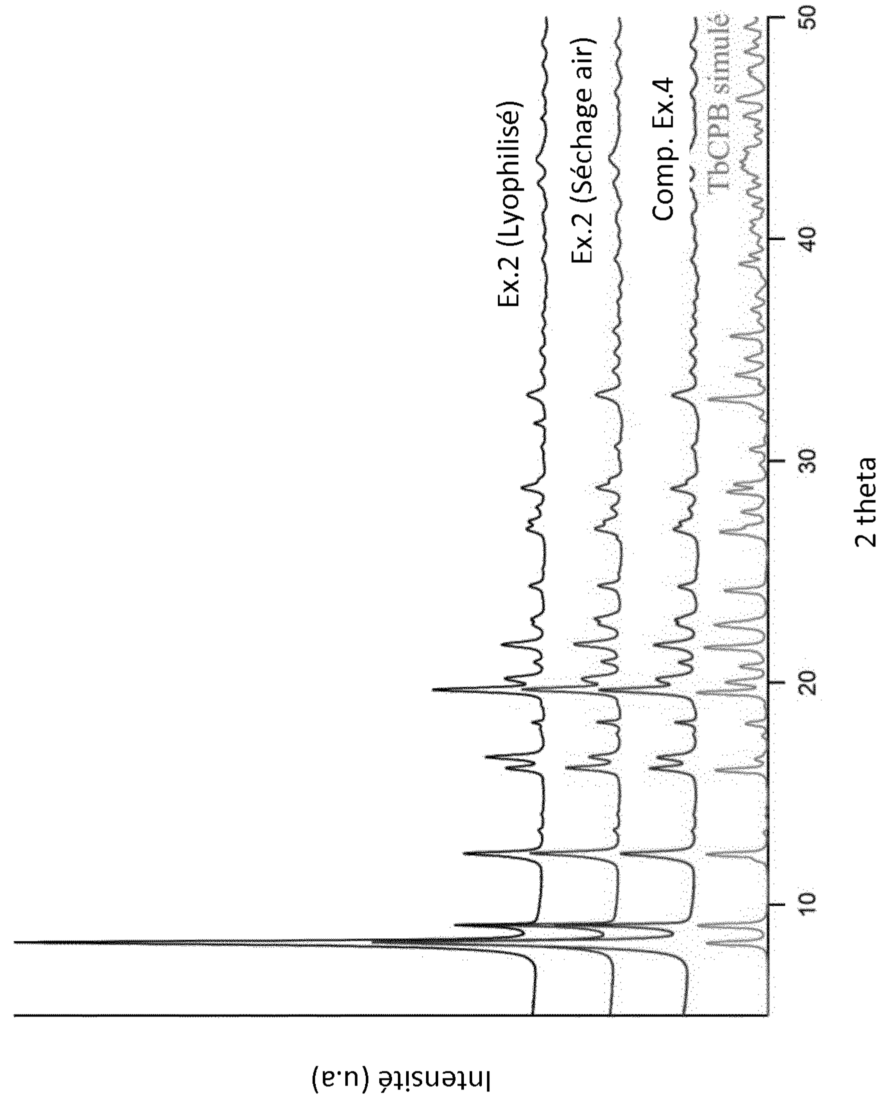
Ex.2 (Lyophilisé)
Ex.2 (Séchage air)
Comp. Ex.4
TbCPB simulé
10
20
30
40
50
2 theta
Intensité (u.a)

**Figure 9**

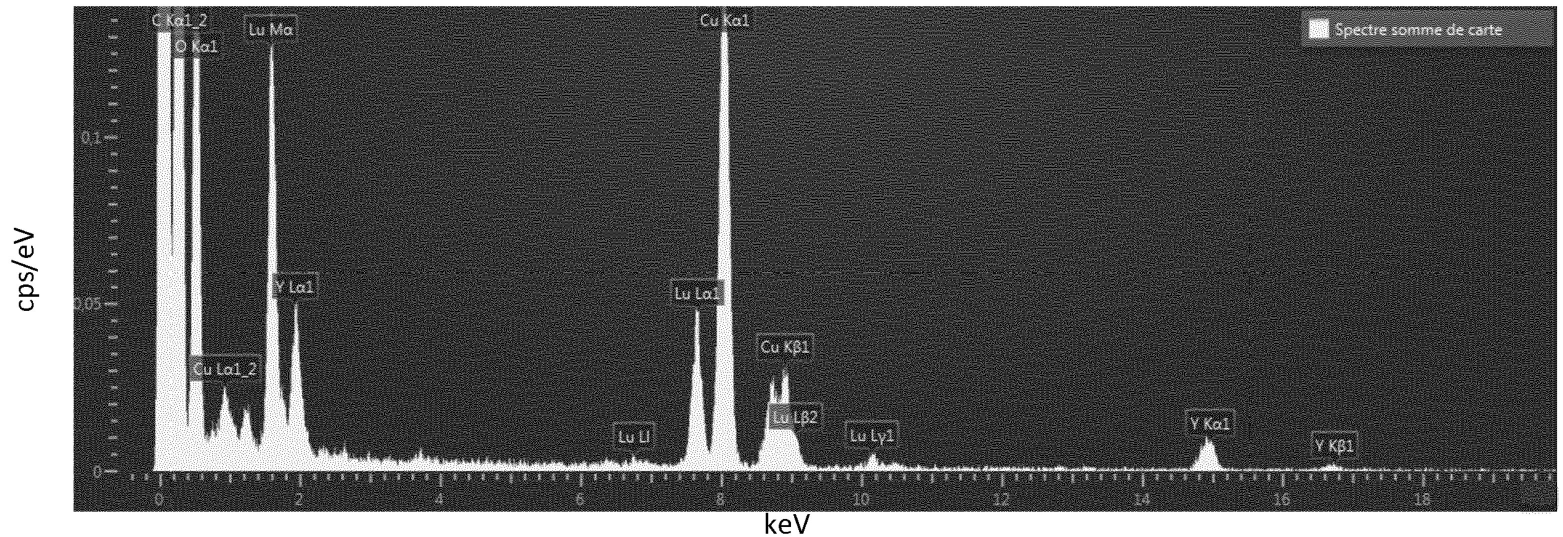


**Figure 10**

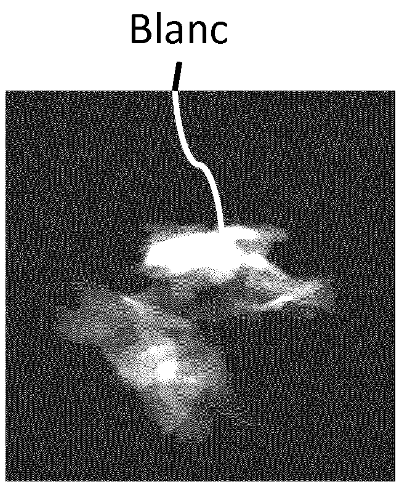


**Figure 11A**

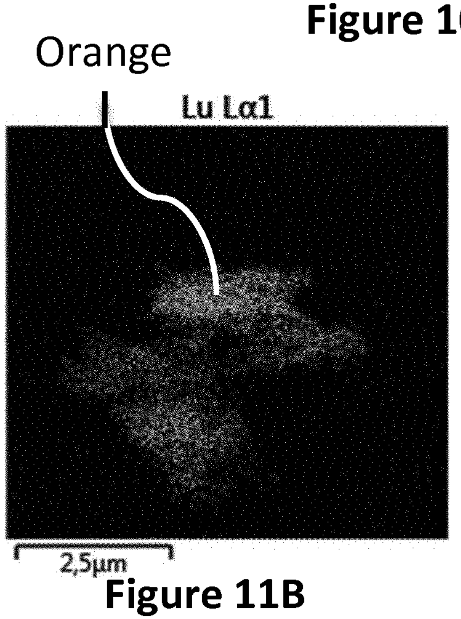


**Figure 11B**

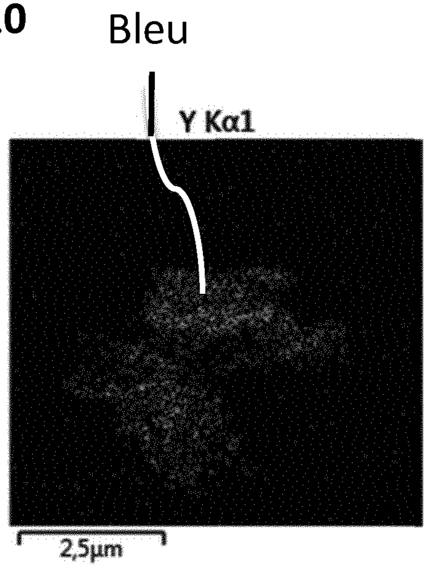


**Figure 11C**

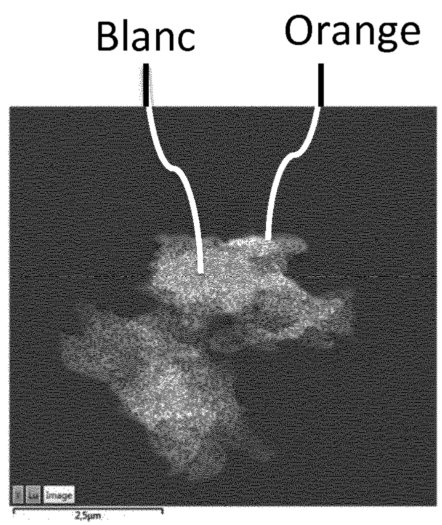


**Figure 11D**

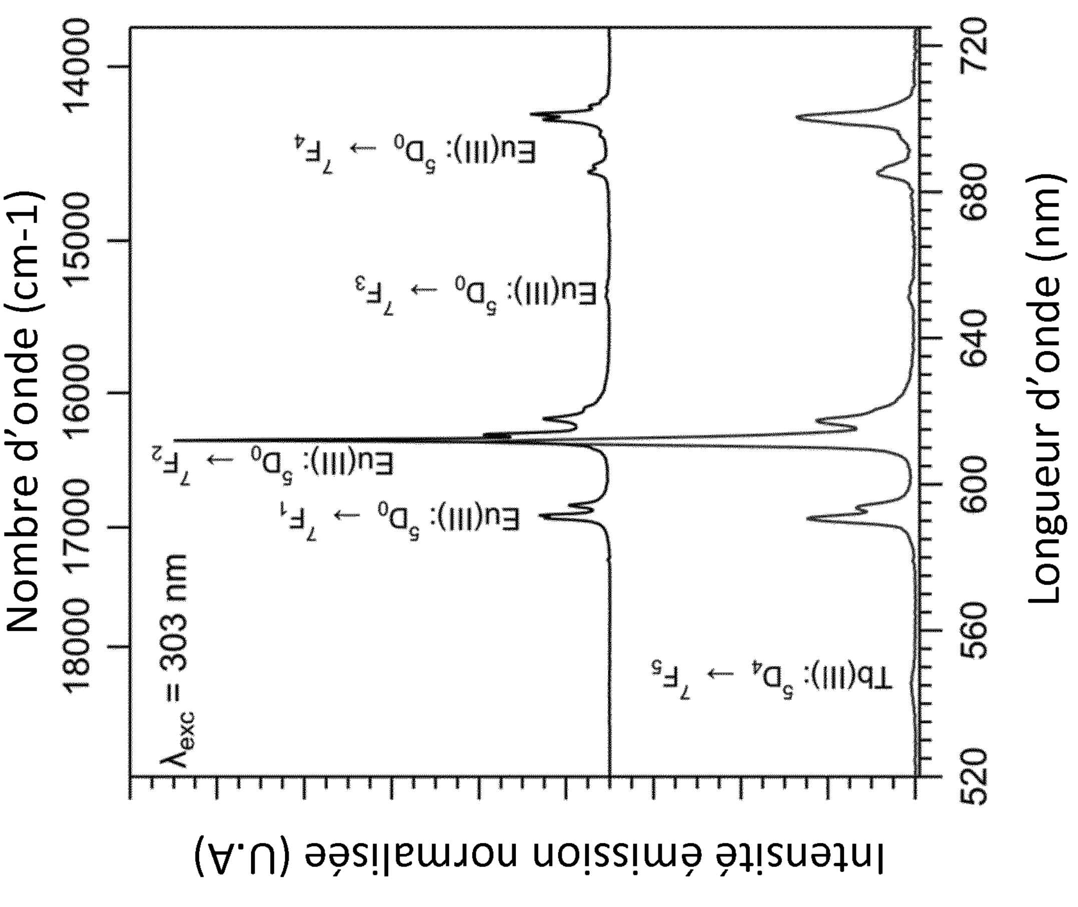
Nombre d'onde (cm-1)
18000
17000
16000
15000
14000
λexc = 303 nm
Eu(III): 5D0 → 7F1
Eu(III): 5D0 → 7F2
Eu(III): 5D0 → 7F3
Eu(III): 5D0 → 7F4
Tb(III): 5D4 → 7F5
Intensité émission normalisée (U.A)
520
560
600
640
680
720
Longueur d'onde (nm)

Figure 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 3004459


### Littérature non-brevet citée dans la description


- **X. FAN et al.** Heteronuclear lanthanide-based coordination polymers exhibiting tunable multiple emission spectra. *JOURNAL OF MATERIALS CHEMISTRY C,* vol. 2 (28
- **I. BADIANE et al.** High Brightness and Easy Color Modulation in Lanthanide-Based Coordination Polymers with 5-Methoxyisophtalate as Ligand : Toward Emission Colors Additive Strategy. *CRYSTAL GROWTH & DESIGN,* vol. 17 (3
- **D'ABERT-MANGA BADIANE et al.** Lanthanide-Based Coordination Polymers with a 4,5-Dichorophtalate Ligand Exhibiting Highly Tunable Luminescence : Toward Luminescent Bar Codes. *INORGANIC CHEMISTRY,* vol. 57 (6
- **XIAO FAN et al.** A Family of Lanthanide-Based Coordination Polymers with Boronic Acid as Ligand. *INORGANIC CHEMISTRY,* vol. 54 (11